# EUROPEAN PATENT APPLICATION

(11) **EP 1 845 482 A2**
(43) Date of publication of application: **17.10.2007**
(21) Application number: 07007245.9
(22) Date of filing: 05.04.2007
(51) Int. Cl.: G06K 19/077

(54) **Tag tape and RFID label**

(30) Priority: 13.04.2006 JP 2006111244
(71) Applicant: Brother Kogyo Kabushiki Kaisha, Nagoya-shi, Aichi-ken 467-8561 (JP)
(72) Inventor: Kato, Tsutomu, Nagoya-shi Aichi, 467-8561 (JP)
(74) Representative: Feldmeier, Jürgen

(57) **Abstract**

In a tag tape, adverse effect by an acid component contained in a normal adhesive on corrosion resistance/durability of an RFID circuit element and an article to be stuck is prevented.

In a base tape 101 having ah adhesive layer 101a, a base film 101b, an adhesive layer 101c, and a separation sheet 101d, an RFID circuit element To is provided to be held between the base film 101b and the adhesive layer 101c, and a cover film 103 is stuck to the front side of the base tape 101 through the adhesive layer 101a. The RFID circuit element To is provided with an IC circuit 151 that stores information and a loop antenna 152 connected to the IC circuit part 151. An acid free adhesive is used for the adhesive layer 101c to be located adjacently to the RFID circuit element To.

## Description

### TECHNICAL FIELD

The present invention is related to a tag tape having an antenna base on which an RFID circuit element that stores information is arranged and an RFID label having this tag tape and a print-receiving tape layer on which predetermined printing is made.

### BACKGROUND ART

An RFID (Radio Frequency Identification) systems that transmits/receives information in a non-contact manner (electromagnetic coupling method using a coil, an electromagnetic induction method, an electric wave method of the like) with an RFID circuit element that stores information are known in the field.

A tag-label producing device that transmits/receives information to/from this RFID circuit element and creating an RFID label is known. In this type of tag-label producing device, a tag tape on which a sheet-state antenna base with the RFID circuit element arranged in the tape longitudinal direction with a substantially equal interval is wound around a supply spool. This tag tape comprises a separation material layer provided at the end of one side in the tape thickness direction and separated from the other parts at adhesion, a tape base layer disposed on the other side in the tape thickness direction form this separation material layer and stuck to the separation material layer through an adhesive layer that sticks, an adhesive layer that sticks together disposed on the other side in the tape thickness direction from this tape base layer that sticks a print-receiving tape layer, which will be described later, to the tape base layer, and a sheet-state antenna base disposed between this sticking adhesive layer and the tape base layer and on which an RFID circuit element provided with an IC circuit part that stores information and a tag-side antenna that transmits/receives the information is arranged.

In the tag-label producing device, the above constructed tag tape is supplied from the above supply spool and stuck to the print-receiving tape layer (laminate tape) on which desired printing is made through the above sticking adhesive layer so that a tag label tape with print is formed. And by writing information onto the RFID circuit element provided on this tag label tape with print and by cutting off the tag label tape with print to a desired length, the tag label with printing is continuously created. When the tag label created as above is to be used, the sticking adhesive layer is exposed by releasing the separation material layer so that the entire label can be stuck to the object to be stuck with its adhesive force.

A tag label with this type of layered structure is known (see, for example, JP,A,2000-200334). This prior art tag label has a layered structure consisting of a sticking adhesive layer (second adhesive layer), a tape base layer (base), an antenna base (antenna substrate), a sticking adhesive layer (first adhesive layer) and a print-receiving tape layer (label) in this order from the object to be stuck.

Though not particularly described in the above embodiment, an acrylic adhesive and an emulsion adhesive are usually used for the above adhesive layer that sticks and adhesive layer that sticks together. Since these adhesives are acid in general, when the above prior art tag label is used for an object to be stuck made of metal, paper, fiber and the like which is susceptible to acid, there is a fear that their corrosion resistance/durability is adversely affected.

### DISCLOSURE OF THE INVENTION

### Problem to be Solved by the Invention

An object of the present invention is to provide a tag tape and an RFID label which can prevent adverse effect on corrosion resistance, durability and the like of an RFID circuit element and an object to be stuck by an acid component contained in the normal adhesive by comprising at least one of the adhesive layers by an acid-free adhesive.

### Means for Solving the Problem

To achieve the above-explained first object, a first invention comprises a separation material layer provided at the end on one side in the thickness direction of a tape and separated from other parts at adhesion, a sheet-state antenna base disposed on the other side in the tape thickness direction from the separation material layer and on which an RFID circuit element provided with an IC circuit part that stores information and a tag-side antenna that transmits/receives of the information is provided, and at least one layer of an adhesive layer containing a tag adjacent adhesive layer provided adjacently to the one side or the other side in the tape thickness direction from the antenna base, and of which at least one layer of the adhesive layers being constituted using an acid free adhesive.

In the first invention of the present application, by having a laminated structure including the antenna base on which the RFID circuit element is arranged, the adhesive layer, and the separation material layer, a tag tape that creats an RFID label used by releasing the separation material layer is realized. At this time, by constituting at least one of the adhesive layers using an acid free adhesive, adverse effect on the corrosion resistance, durability and the like of the RFID circuit element and an article or the like to be stuck by an acid component as with the normal adhesive can be prevented.

A second invention is characterized in that the tag adjacent adhesive layer in the first invention is constituted using the acid free adhesive.

By this, the adverse effect on the corrosion resistance of the RFID circuit element by the acid component as with the normal adhesive can be prevented surely.

A third invention is characterized in that the adhesive layer in the second invention has a normal adhesive layer constituted using a normal adhesive, separately from the tag adjacent adhesive layer constituted using the acid free adhesive.

Since the acid free adhesive is relatively expensive, by using the acid free adhesive for the tag adjacent adhesive layer for which the largest effect in improvement in corrosion resistance/durability of the RFID circuit element can be expected, while using a normal adhesive for the rest, the minimum corrosion resistance/durability improvement effect can be obtained while restraining cost increase.

A fourth invention is characterized in that, in any of the first to the third inventions, a print-receiving tape layer is provided at the end on the other side in the tape thickness direction that effects predetermined printing.

In the structure provided with the print-receiving tape layer at the end on the other side in the thickness direction, the corrosion resistance/durability can be improved.

A fifth invention is characterized in that, in the first invention, the RFID label is constituted providing a print-receiving tape layer effected predetermined printing at the end of the other side of the tag tape in the tape thickness direction.

In the fifth invention of the present invention, an RFID label having a laminated structure including an antenna base on which an RFID circuit element is arranged, an adhesive layer, a separation material layer, and a print-receiving tape layer, and used with the separation material layer separated is realized. At this time, by constituting at least one of the adhesive layers using an acid free adhesive, adverse effect on the corrosion resistance, durability and the like on the RFID circuit element or an article to be stuck by an acid component as with the normal adhesive can be prevented.

A sixth invention is characterized in that the tag adjacent adhesive layer in the fifth invention is constituted using an acid free adhesive.

By this, the adverse effect on corrosion resistance of the RFID circuit element by the acid component as with the normal adhesive can be surely prevented.

A seventh invention is characterized in that the adhesive layer in the sixth invention has a normal adhesive layer constituted using a normal adhesive, separately from the tag adjacent adhesive layer constituted using the acid free adhesive.

Since the acid free adhesive is relatively expensive, by using the acid free adhesive for the tag adjacent adhesive layer for which the largest effect in improvement in corrosion resistance/durability of the RFID circuit element can be expected, while using a normal adhesive for the rest, the minimum corrosion resistance/durability improvement effect can be obtained while restraining cost increase.

An eighth invention is characterized in that, in any of the fifth to the seventh inventions, the adhesive layer having a first intermediate base layer disposed at an intermediate part between the print-receiving tape layer and the antenna base in the label thickness direction and being constituted by the acid free adhesive is provided adjacently at least to one side of the print-receiving tape layer side and the separation material layer side in the label thickness direction from the antenna base.

In the laminated structure including the print-receiving tape layer, the first intermediate base-material layer, the antenna base, and the separation material layer from the label front side to the back side, an acid free adhesive layer which can realize improvement in corrosion resistance and durability is provided between the first intermediate base layer and the antenna base or between the antenna base and the separation material layer. When an adhesive layer is provided between the first intermediate base layer and the antenna base, the antenna base can be attached to the first intermediate base layer through the acid free adhesive layer (which functions as an adhesive layer for fixation) so that the corrosion resistance and durability of the RFID circuit element can be improved. Also, the entire label can be stuck to the object to be stuck by a portion located outside the antenna base in the acid free adhesive layer (which functions as an adhesive layer that sticks) and the corrosion resistance and durability of the object to be stuck can be improved. When an adhesive layer is provided between the antenna base and the separation material layer, the entire label can be stuck to the object to be stuck by the acid free adhesive layer covering substantially the whole label back faces of the first intermediate base layer and the antenna base (which functions as the sticking adhesive layer), the corrosion resistance and durability of the object to be stuck can be improved.

A ninth invention is characterized in that, in any of the fifth to the seventh inventions, the adhesive layer having a second intermediate base layer disposed at the intermediate part between the separation material layer and the antenna base in the label thickness direction and being constituted by the acid free adhesive is provided adjacently at least to one side of the print-receiving tape layer side and the separation material layer side in the label thickness direction from the antenna base.

In the laminated structure including the print-receiving tape layer, the antenna base, the second intermediate base layer, and the separation material layer from the label front side to the back side, an acid free adhesive layer which can realize improvement in corrosion resistance and durability is provided between the print-receiving tape layer and the antenna base or between the antenna base and the second intermediate base layer. When an adhesive layer is provided between the printed layer and the antenna base, they can be stuck to the printed layer through the acid free adhesive layer covering substantially the entire label front face sides of the second intermediate base layer and the antenna base (which function as the sticking adhesive layers) so that lowering of the corrosion resistance and durability of the RFID circuit element and the object to be stuck due to an adhesive protruding in the width direction at adhesion can be prevented. When the adhesive layer is provided between the antenna base and the second intermediate base layer, the antenna base can be stuck to the second intermediate base layer through the acid free adhesive layer (which functions as the fixation adhesive layer) and the corrosion resistance and durability of the RFID circuit element can be improved. Also, the second intermediate base layer and the print-receiving tape layer can be stuck together by a portion located outside the antenna base in the acid free adhesive layer (which functions as the sticking adhesive layer), lowering of the corrosion resistance and durability of the RFID circuit element and the object to be stuck by the adhesive protruding in the width direction at adhesion can be prevented.

A tenth invention is characterized in that, in any of the fifth to the seventh invention, a third intermediate base layer disposed at the intermediate part between the print-receiving tape layer and the antenna base in the label thickness direction and a fourth intermediate base layer disposed at an intermediate part between the third intermediate base layer and the separation material layer in the label thickness direction are provided, and the antenna base is arranged at an intermediate part between the third intermediate base layer and the fourth intermediate base layer in the label thickness direction, and the adhesive layer constituted by the acid free adhesive is provided adjacently at least to one side of the print-receiving tape layer side and the separation material layer side in the label thickness direction from the antenna base.

In the laminated structure including the print-receiving tape layer, the third intermediate base layer, the antenna base, the fourth intermediate base layer, and the separation material layer from the label front side to the back side, an acid free adhesive layer which can realize improvement in corrosion resistance and durability is provided between the third intermediate base layer and the antenna base or between the antenna base and the fourth intermediate base layer. When an adhesive layer is provided between the third intermediate base and the antenna base, the antenna base can be attached to the third intermediate base layer through the acid free adhesive layer (which functions as the fixation adhesive layer) so that the corrosion resistance and durability of the RFID circuit element can be improved, and the third intermediate base layer and the fourth intermediate base layer can be stuck together by a portion located outside the antenna base of the acid free adhesive layer (which functions as the sticking adhesive layer) so that lowering of the corrosion resistance and durability of the RFID circuit element and the object to be stuck due to the adhesive protruding in the width direction at adhesion can be prevented. When the adhesive layer is provided between the antenna base and the fourth intermediate base layer, the antenna base can be attached to the fourth intermediate base layer through the adhesive layer (which functions as the fixation adhesive layer) and the corrosion resistance and durability of the RFID circuit element can be improved. Also, the third intermediate base layer and the fourth intermediate base layer can be stuck together by a portion located outside the antenna base in the acid free adhesive layer (which functions as the sticking adhesive layer), and lowering of the corrosion resistance and durability of the RFID circuit element and the object to be stuck by the adhesive protruding in the width direction at adhesion can be prevented.

An eleventh invention is characterized in that, in any of the fifth to the tenth inventions, the print-receiving tape layer has the predetermined printing on the surface on the antenna base side.

By this, in an RFID label provided with a printing area formed by mirror-image printing from the antenna base side (back side) of the print-receiving tape layer, corrosion resistance and durability can be improved.

A twelfth eleventh invention is characterized in that, in any of the fifth to the tenth inventions, the print-receiving tape layer has the predetermined printing on the surface opposite to the antenna base side.

By this, in an RFID label provided with a printing area formed by normal-image printing from the side opposite to the antenna base side (front side) of the print-receiving tape layer, corrosion resistance and durability can be improved.

According to the present invention, by constituting at least one of the adhesive layers using an acid free adhesive, adverse effect by an acid component as with the normal adhesive on the corrosion resistance, durability and the like of the RFID circuit element or an article to be stuck can be prevented.

### BRIEF DESCRIPTION OF THE DRAWING

Fig. 1 is a system block diagram illustrating an RFID tag manufacturing system provided with a tag-label producing device for producing an RFID label according to an embodiment of the present invention.
Fig. 2 is a perspective view illustrating an entire structure of the tag-label producing device.
Fig. 3 is a perspective view illustrating a structure of an internal unit inside the tag-label producing device.
Fig. 4 is a plan view illustrating the structure of the internal unit.
Fig. 5 is an enlarged plan view schematically illustrating a detailed structure of a cartridge.
Fig. 6 is a conceptual diagram illustrating a conceptual configuration of the RFID circuit element provided on a base tape fed out of a first roll seen from an arrow D direction in Fig. 5.
Fig. 7 is a partially extracted perspective view illustrating a detailed structure of an essential part of a label discharge mechanism.
Fig. 8 is a perspective view illustrating an appearance of the internal unit in a state where the label discharge mechanism has been removed from the structure shown in Fig. 3.
Fig. 9 is a perspective view illustrating an appearance of a cutting mechanism when a half cutter is removed from the internal unit.
Fig. 10 is a perspective view illustrating an appearance of the cutting mechanism when the half cutter is removed from the internal unit.
Fig. 11 is a perspective view illustrating a detailed structure of a movable blade and a fixed cutter together with the half cut unit.
Fig. 12 is a partially enlarged sectional view illustrating the detailed structure of the movable cutter and the fixed cutter together with the half cut unit.
Fig. 13 is a front view illustrating an appearance of the movable cutter.
Fig. 14 is a cross sectional view by A-A section in Fig. 13.
Fig. 15 is a functional block diagram illustrating a control system of the tag-label producing device.
Fig. 16 is a circuit diagram schematically illustrating a circuit configuration of a connection portion among a transmission circuit, a receiving circuit and a loop antenna.
Fig. 17 is a functional block diagram illustrating a functional configuration of the RFID circuit element.
Fig. 18 is a top view and a bottom view illustrating an example of an appearance of the RFID label formed after information writing (or reading) of the RFID circuit element and cutting of a tag label tape with print have been finished by the tag-label producing device.
Fig. 19 is a diagram obtained by rotating a cross sectional view by IXX-IXX' section in Fig. 18 counterclockwise by 90 degrees.
Fig. 20 is a view illustrating an example of a screen displayed on PC (terminal or a general-purpose computer) at an access (reading or writing) of an IC circuit part of the RFID circuit element to the RFID tag information by the tag-label producing device.
Fig. 21 is a diagram schematically illustrating a layered structure of a tag label tape with print (base tape) according to a case 1.
Fig. 22 is a diagram schematically illustrating a layered structure of a tag label tape with print (base tape) according to a case 2.
Fig. 23 is a diagram schematically illustrating a layered structure of a tag label tape with print (base tape) according to a case 3.
Fig. 24 is a diagram schematically illustrating a layered structure of a tag label tape with print (base tape) according to a case 4.
Fig. 25 is a diagram schematically illustrating a layered structure of a tag label tape with print (base tape) according to a case 5.
Fig. 26 is a diagram schematically illustrating a layered structure of a tag label tape with print (base tape) according to a case 6.
Fig. 27 is a diagram schematically illustrating a layered structure of a tag label tape with print (base tape) according to a case 7.
Fig. 28 is a diagram schematically illustrating a layered structure of a tag label tape with print (base tape) according to a case 8.
Fig. 29 is a diagram schematically illustrating a layered structure of a tag label tape with print (base tape) according to a case 9.
Fig. 30 is a plan view illustrating a detailed structure of a cartridge in a variation where tape sticking is not carried out.
Fig. 31 is a diagram schematically illustrating a layered structure of a tag label tape with print (base tape) according to a case 10.
Fig. 32 is a diagram schematically illustrating a layered structure of a tag label tape with print (base tape) according to a case 11.
Fig. 33 is a diagram schematically illustrating a layered structure of a tag label tape with print (base tape) according to a case 12.
Fig. 34 is a diagram schematically illustrating a layered structure of a tag label tape with print (base tape) according to a case 13.
Fig. 35 is a diagram schematically illustrating a layered structure of a tag label tape with print (base tape) according to a case 14.
Fig. 36 is a diagram schematically illustrating a layered structure of a tag label tape with print (base tape) according to a case 15.
Fig. 37 is a diagram schematically illustrating a layered structure of a tag label tape with print (base tape) according to a case 16.
Fig. 38 is a diagram schematically illustrating a layered structure of a tag label tape with print (base tape) according to a case 17.
Fig. 39 is a diagram schematically illustrating a layered structure of a tag label tape with print (base tape) according to a case 18.

### BEST MODE FOR CARRYING OUT THE INVENTION

An embodiment of a tag tape and an RFID label of the present invention will be described below referring to the attached drawings.

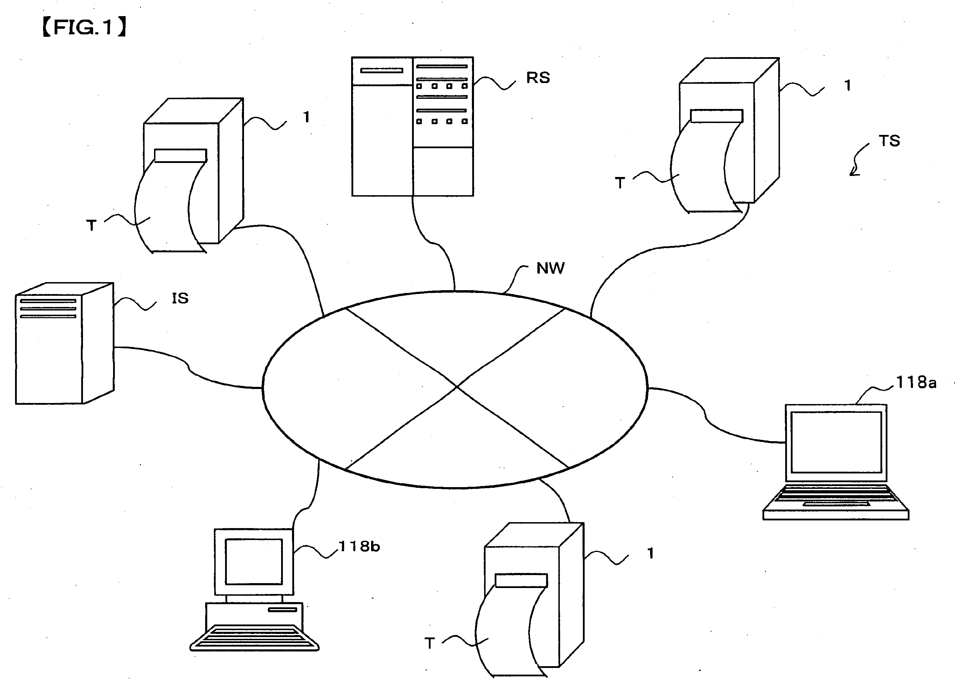

Fig. 1 is a system block diagram illustrating an RFID tag manufacturing system provided with a tag-label producing device that produces an RFID label using the embodiment of the tag tape of the present invention.

In an RFID tag manufacturing system TS shown in Fig. 1, a tag label creating is connected to a route server RS, a plurality of information servers IS, a terminal 118a, and a general-purpose computer 118b through a cable or radio communication line NW. The terminal 118a and the general-purpose computer 118b are collectively referred to simply as "PC118" below as appropriate.

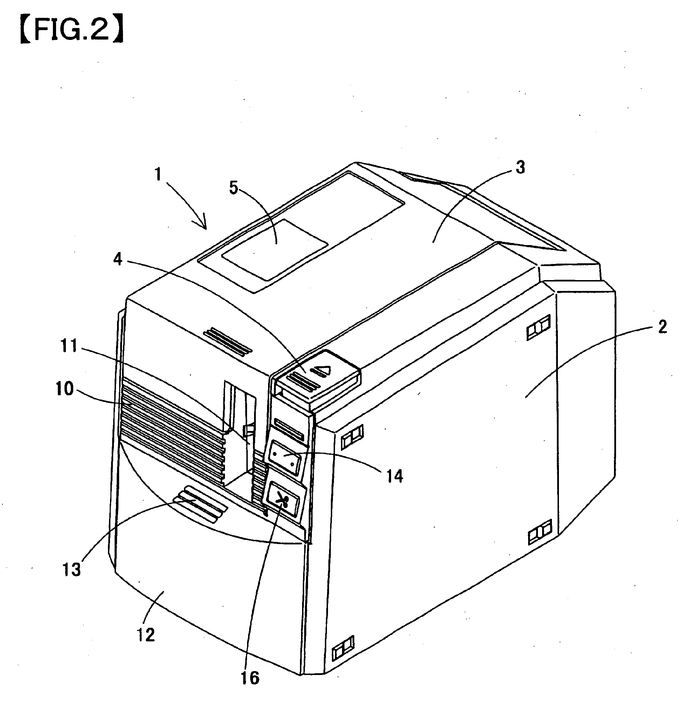

Fig. 2 is a perspective view illustrating the entire structure of the tag-label producing device 1.

In Fig. 2, the tag-label producing device 1 connected to the PC 118 creates an RFID label with desired printing based on operation from the PC 118 and has a device body 2 and an opening/closing lid 3 provided capable of being opened/closed on the top face of the device body 2.

The device body 2 is located at the front side (left front side in Fig. 2) and comprises a side wall 10 provided with a label discharge port 11 that discharges a created RFID label T (which will be described later) created inside the device body 2 to the outside and a side lid 12 provided below the label discharge port 11 in this side wall 10 and having its lower end rotatably supported.

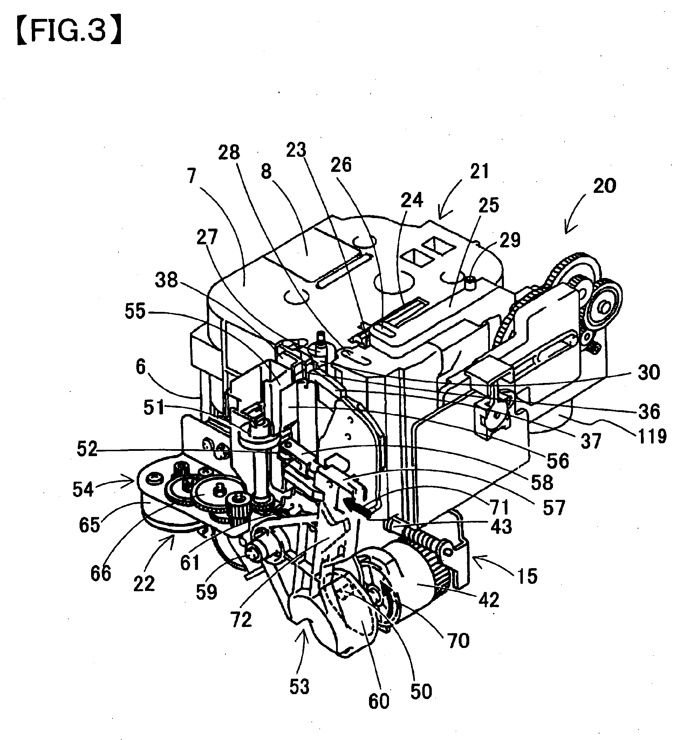

The side lid 12 is provided with a pusher portion 13, and the side lid 12 is opened frontward by pushing in this side wall 13 from above. Also, below an opening/closing button 4 in the side wall 10, a power button 14 that powers on/off of the tag-label producing device 1 is provided. Below this power button 14, a cutter driving button 16 is provided that drives a cutting mechanism 15 (See Fig. 3, which will be described later) disposed in the device body 2 through manual operation by a user, and a tag label tape with print 109 (which will be described later) is cut to a desired length so as to create an RFID label T by pushing this button 16.

The opening/closing lid 3 is pivotally supported rotatably at the end on the right depth side in Fig. 2 of the device body 2 and urged in the opening direction all the time through an urging member such as a spring. And when the opening/closing button 4 arranged adjacently to the opening/closing lid 3 on the top face of the device body 2 is pushed, lock between the opening closing lid 3 and the device body 2 is released and opened by action of the urging member. A transparent window 5 covered by a transparent cover is provided at the side center of the opening/closing lid 3.

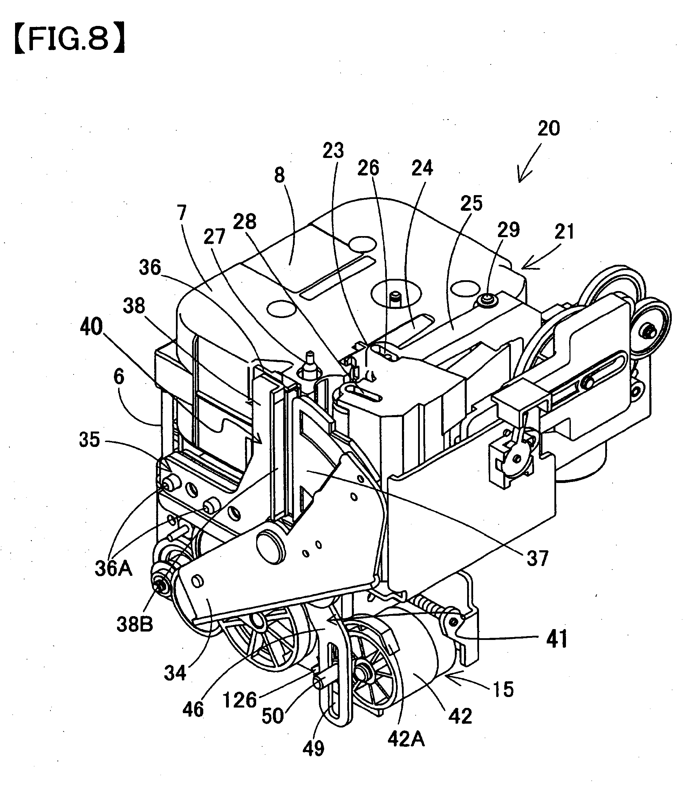

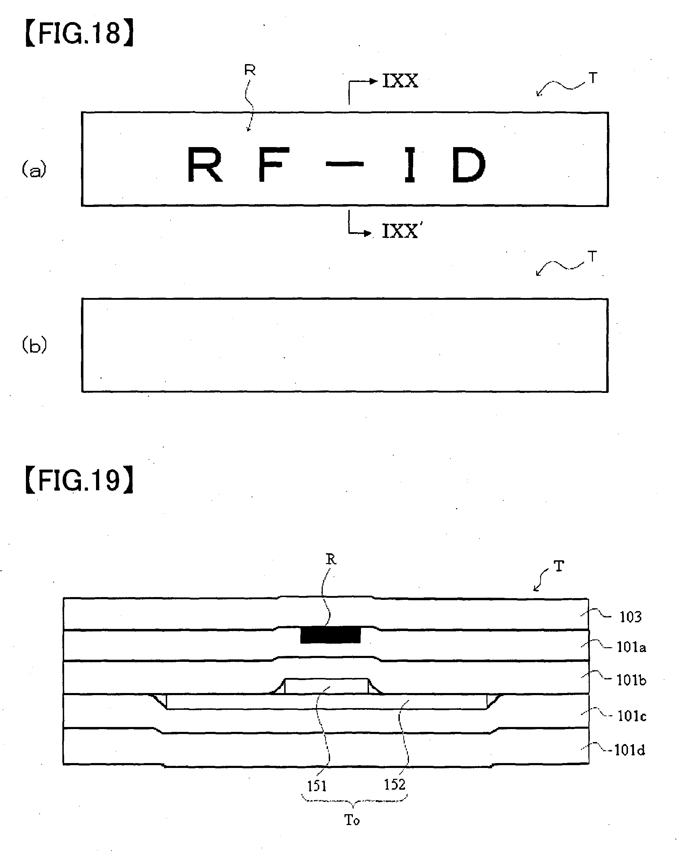

Fig. 3 is a perspective view illustrating a structure (however, a loop antenna LC, which will be described later, is omitted) of an internal unit 20 inside the tag-label producing device 1. In Fig. 3, the internal unit 20 comprises a cartridge holder 6 that stores a cartridge 7, a printing mechanism 21 provided with a printing head (thermal head) 23, the cutting mechanism 15, a half cut unit 35 (See Fig. 8, which will be described later), and a label discharge mechanism 22 that discharges the created RFID label T (See Fig. 18, which will be described later) from the label discharge port 11 (See Fig. 2).

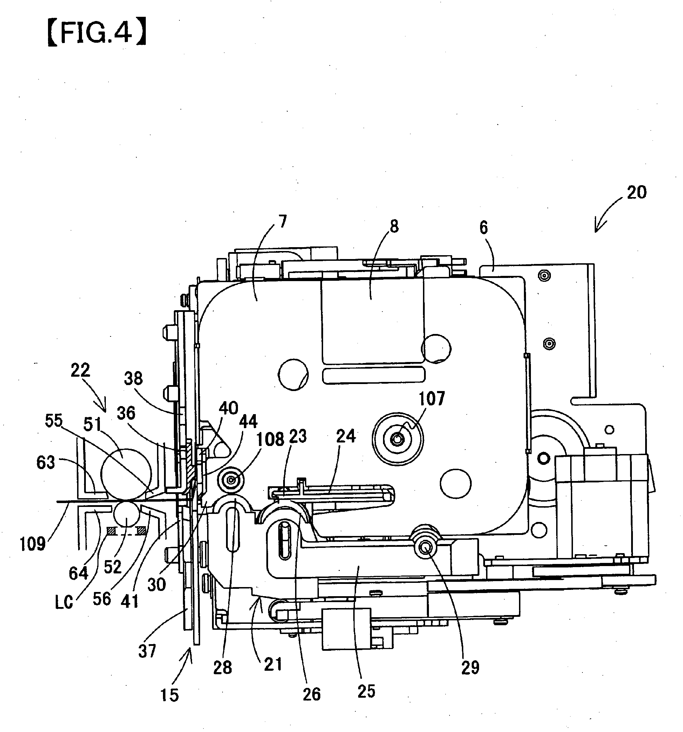

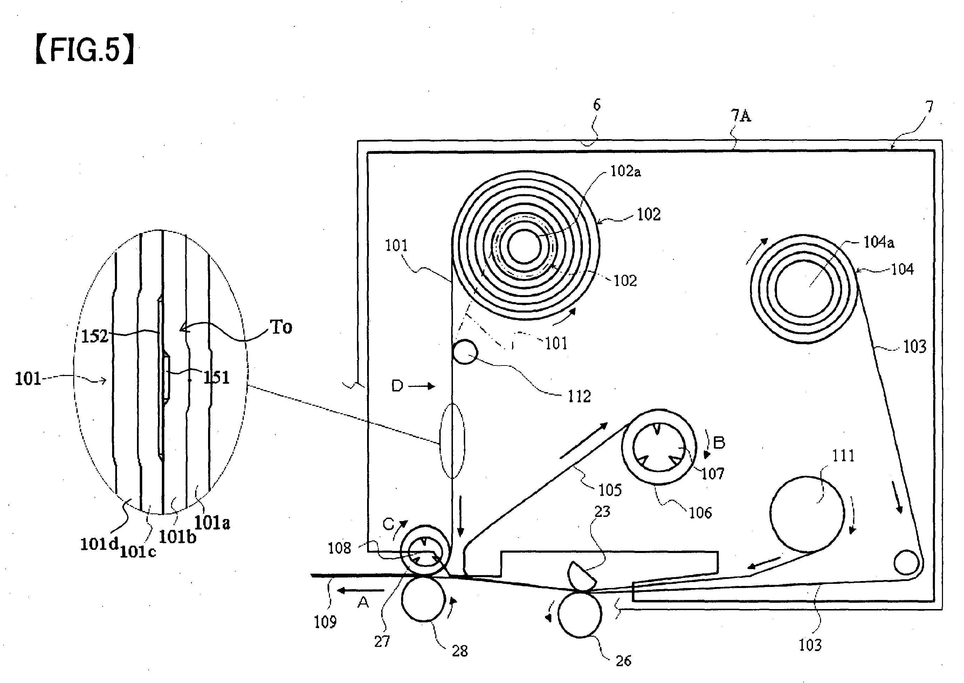

Fig. 4 is a plan view illustrating the structure of the internal unit 20 shown in Fig. 3, and Fig. 5 is an enlarged plan view schematically illustrating the detailed structure of the cartridge 7.

In Figs. 4 and 5, the cartridge holder 6 stores the cartridge 7 so that the direction of the printed the tag label tape 109 in the width direction discharged from the label discharge port 11 should be perpendicular. The cartridge 7 has an enclosure 7A, a first roll 102 arranged inside the enclosure 7A and around which a base tape 101 in the band state is wound, a second roll 104 around which a transparent cover film 103 having substantially the same width as that of the base tape 101 is wound, a ribbon-supply roll 111 that feeds out an ink ribbon 105 (thermal transfer ribbon, however, it is not needed when the printed tape is a thermal tape), a ribbon winding roller 106 that winds up the printed ribbon 105, a tape feeding roller 27 rotatably supported in the vicinity of the tape discharge portion 30 of the cartridge 7, and a guide roller 112 functioning as conveying position regulating means.

The tape feeding roller 27 presses and sticks the base tape 101 and the cover film 103 together so as to have the tag label tape with print 109 and feeds the tape in a direction shown by an arrow A (also functioning as a pressure roller).

In the first roll 102, the base tape 101 in which a plurality of RFID circuit elements To are sequentially formed in the longitudinal direction with a predetermined equal interval is wound around a reel member 102a. The base tape 101 has a four-layered structure in this example (See the partially enlarged view in Fig. 5) and is constructed in lamination in the order of an adhesive layer 101a made of an appropriate adhesive, a colored base film 101b made of polyethylene terephthalate (PET) and the like, an adhesive layer 101c made of an acid free adhesive (whose details will be described later), and a separation sheet 101d from the side wound inside (right side in Fig. 5) toward the opposite side (left side in Fig. 5).

A loop antenna 152 constructed in the loop-coil shape that transmits/receives of information is provided on the back side of the base film 101b (left side in Fig. 5), and an IC circuit part 151 that stores information is formed so as to be connected to that, by which the RFID circuit element To is constructed.

On the front side of the base film 101b (right side in Fig. 5), the adhesive layer 101a that sticks the cover film 103 later is formed, while on the back side of the base film 101b (left side in Fig. 5), the RFID circuit element To (more exactly, a sheet-state antenna base in which the RFID circuit element To is arranged. The same applies to the following) is stuck by the adhesive layer 101c, and moreover, the separation sheet 101d is stuck to the base film 101b by the adhesive layer 101c. When the RFID label T finally completed in the label state is to be stuck to a predetermined article or the like, the separation sheet 101d enables adhesion of the RFID label to the article by the adhesive layer 101c through release of the separation sheet.

The second roll 104 has the cover film 103 wound around a reel member 104a. In the cover film 103 fed out of the second roll 104, the ribbon 105 driven by the ribbon-supply roll 111 arranged on its back face side (that is, the side to be stuck to the base tape 101) and the ribbon winding roller 106 is brought into contact with the back face of the cover film 103 by being pressed by the printing head 23.

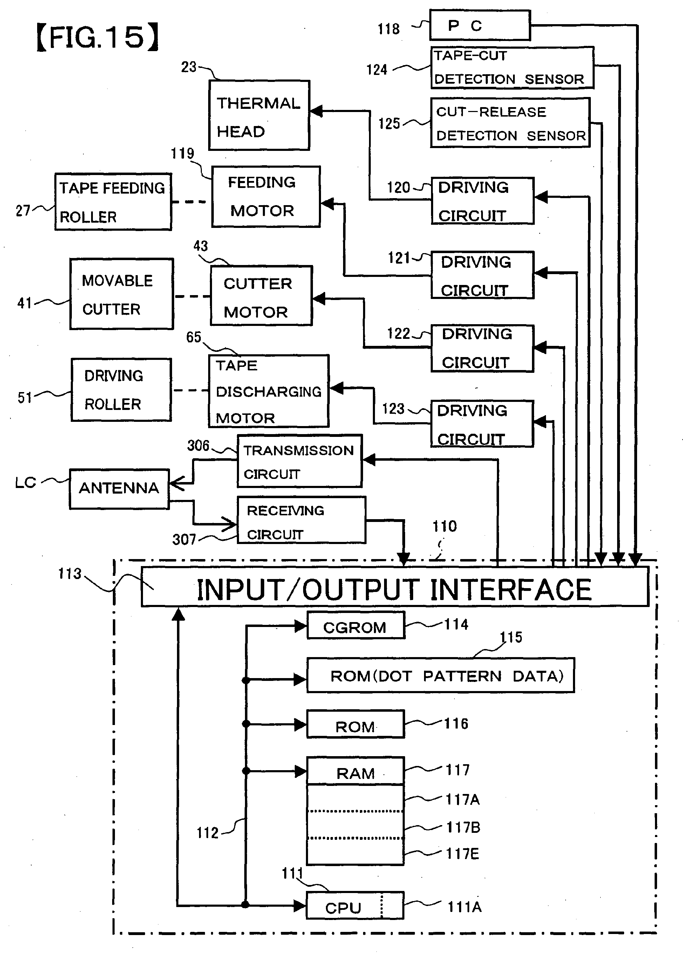

The ribbon winding roller 106 and the tape feeding roller 27 are rotated/driven in conjunction by a driving force of a feeding motor 119 (See Fig. 3 and Fig. 15, which will be described later), which is a pulse motor, for example, provided outside the cartridge 7, transmitted to a ribbon winding driving shaft 107 and a tape feeding roller driving shaft 108 through a gear mechanism, not shown.

On the other hand, the printing head 23 is mounted to a head mounting portion 24 installed upright at the cartridge holder 6 and arranged on the upstream side in the conveying direction from the tape feeding roller 27 to the cover film 103.

Also, in front of the cartridge 7 of the cartridge holder 6 (lower side in Fig. 4), a roller holder 25 is pivotally supported rotatably by a support shaft 29 so that switching can be made between a printing position and a release position by a switching mechanism. At this roller holder 25, a platen roller 26 and a tape pressure roller 28 are rotatably disposed, and when the roller holder 25 is switched to the printing position, the platen roller 26 and the tape pressure roller 28 are pressed onto the printing head 23 and the tape feeding roller 27.

In the above construction, the base tape 101 fed out of the first roll 102 is supplied to the tape feeding roller 27. On the other hand, as for the cover film 103 fed out of the second roll 104, ink ribbon 105 driven by the ribbon-supply roll 111 arranged on its back face side (that is, the side stuck to the base tape 101) and the ribbon winding roller 106 is pressed by the printing head 23 and brought into contact with the back face of the cover film 103.

When the cartridge 7 is attached to the cartridge holder 6 and the roller holder 25 is moved from the release position to the printing position, the cover film 103 and the ink ribbon 105 are held between the printing head 23 and the platen roller 26 and the base tape 101 and the cover film 103 are held between the tape feeding roller 27 and the pressure roller 28. And the ribbon winding roll 106 and the tape feeding roller 27 are rotated/craven by the driving force of the feeding motor 119 in a direction shown by an arrow B and an arrow C, respectively, in synchronization with each other. At this time, the tape feeding roller driving shaft 108, the pressure roller 28 and the platen roller 26 are connected through the gear mechanism (not shown), and with the driving of the tape feeding roller driving shaft 108, the tape feeding roller 27, the pressure roller 28, and the platen roller 26 are rotated, and the base tape 101 is fed out of the first roll 102 and supplied to the tape feeding roller 27 as mentioned above. On the other hand, the cover film 103 is fed out of the second roll 104, and a plurality of heater elements of the printing head 23 is electrified by a printing driving circuit 120 (See Fig. 15, which will be described later). As a result, printing R (See Fig. 18, which will be described later) corresponding to the RFID circuit element To on the base tape to be stuck is printed on the back face of the cover film 103. And the base tape 101 and the cover film 103 on which printing has been finished are stuck together by the tape feeding roller 27 and the pressure roller 28 to be integrated and formed as the tag label tape with print 109 and conveyed out of the cartridge 7 through the tape discharge portion 30. The ink ribbon 105 having printing on the cover film 103 finished is wound around the ribbon winding roller 106 by driving of the ribbon winding roll driving shaft 107.

On the top face of the enclosure 7A of the cartridge 7, a tape identification display portion 8 displaying the tape width, tape color and the like of the base tape 101 built in the cartridge 7 is provided. When the cartridge 7 is attached to the cartridge holder 6 and the opening/closing lid 3 is closed, the above-mentioned transparent window 5 is opposed to the tape identification display portion 8 so that the tape identification display portion 8 can be visually checked from outside of the device body 2 through the transparent cover of the transparent window 5. By this, the type and the like of the cartridge 7 attached to the cartridge holder 6 can be easily checked visually from outside the device body 2 through the transparent window 5.

On the other hand, as mentioned above, the internal unit 20 is provided with the cutting mechanism 15 and the label discharge mechanism 22 and is also provided with the loop antenna LC that writes/reads information through radio communication to/from the RFID circuit element To provided at the base tape 101 (tag label tape with print after sticking, the same applies to the following). And after information writing/reading by the loop antenna LC to/from the tag label tape with print 109 created by sticking together as above at the RFID circuit element To is carried out, the tag label tape with print 109 is cut by the cutting mechanism 15 automatically or by operating the cutter driving button 16 (See Fig. 2) and the RFID label T is created. This RFID label T is discharged from the label discharge port 11 formed at the side wall 10 (See Fig. 2) by the label discharge mechanism 22 after that.

The cutting mechanism 15 is provided with a fixed blade 40, a movable cutter 41 constructed by a metal member that cuts action along with the fixed blade 40, a cutter helical gear 42 connected to the movable cutter 41 (See Fig. 3), and a cutter motor 43 connected to the cutter helical gear 42 through a gear row (See Fig. 3).

The label discharge mechanism 22 functions as discharge means disposed in the vicinity of the label discharge port 11 provided at the side wall 10 of the device body 2 and forcedly discharging the tag label tape with print 109 after being cut by the cutting mechanism 15 (in other words, the RFID label T. The same applies to the following) from the label discharge port 11 and also as position regulating means that regulates the conveying position of the tag label tape with print 109 at the vicinity position of the label discharge port 11 (in detail, an information reading/writing position by the loop antenna LC). That is, the label discharge mechanism 22 comprises a driving roller 51, a pressure roller 52 opposed to the driving roller 51 with the tag label tape with print 109 between them, a pressure operation mechanism portion 53 operated to press the pressure roller 52 onto the tag label tape with print 109 or to release the pressure (See Fig. 3), and a discharge driving mechanism portion 54 that rotates the tag label tape with print 109 so as to be discharged by the driving roller 51 in conjunction with the pressure release operation of the pressure operation mechanism portion 53.

At this time, first guide walls 55, 56 and second guide walls 63, 64 that guides the tag label tape with print 109 to the label discharge port 11 are provided inside the label discharge pot 11 (See Fig. 4). The first guide walls 55, 56 and the second guide walls 63, 64 are integrally formed, respectively, and arranged at the discharge position of the tag label tape with print 109 cut by the fixed blade 40 and the moveable blade 41 so that they are separated from each other with a predetermined interval.

The pressure operation mechanism portion 53 comprises, as shown in the above-mentioned Fig. 3, a roller support holder 57, a roller support portion 58 mounted at the roller support holder 57 that holds the pressure roller 52 at the tip end portion, a holder support portion 59 that rotatably supports the roller support holder 57, a cam 60 that drives the pressure operation mechanism portion 53 in conjunction with the cutting mechanism 15, and an urging spring 61.

The roller support portion 58 rotatably supports the pressure roller 52 so as to be held in the vertical direction. And when the roller support holder 57 is rotated counterclockwise around a holder support shaft 59 through the cam 60 by rotation of the cutter helical gear 42 (arrow 71 direction in Fig. 3), the pressure roller 52 is pressed onto the tag label tape with print 109. Also, when the cutter helical gear 42 is rotated again, the holder support shaft 59 is rotated in the direction opposite to that of the previous time by the urging spring 61, and the pressure roller 52 is separated from the tag label tape with print 109.

The discharge driving mechanism portion 54 comprises a tape dischaging motor 65 and a gear train 66, and after the tag label tape with print 109 is pressed by the pressure roller 52 onto the driving roller 51, the discharge operation mechanism portion 54 drives the tape dischaging motor 65 so as to rotate the driving roller 51 to the discharge direction of the tag label tape with print 109 so that the tag label tape with print 109 is forcedly discharged to the discharge direction.

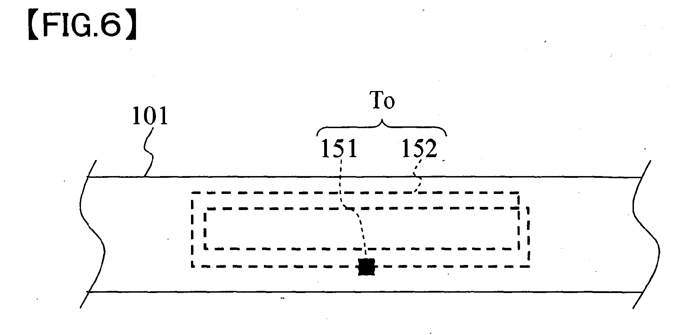

Fig. 6 is a conceptual diagram illustrating a conceptual configuration of the RFID circuit element To provided at the base tape 101 fed out from the first roll 102, seen from an arrow D direction in Fig. 5. In Fig. 6, the RFID circuit element To comprises the loop antenna 152 constructed in the loop-coil shape that transmits/receives information and the IC circuit part 151 connected to that that stores the information.

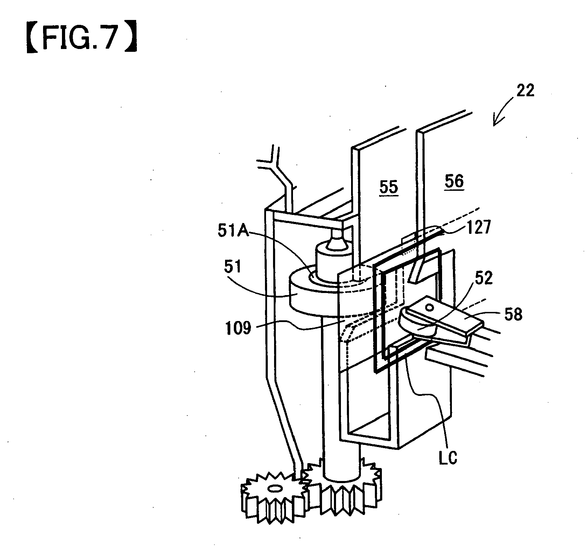

Fig. 7 is a partially extracted perspective view illustrating a detailed structure of an essential part of the label discharge mechanism 11. In Fig. 7, middle portions of the first guide walls 55, 56 in the vertical direction are cut away, and the driving roller 51 is provided at the first guide wall 55, facing the discharge position of the tag label tape with print 109 from the cutaway portion. The driving roller 51 has a roller cutaway portion 51A formed by a concentric groove on its top face. In the meantime, at the other first guide wall 56, the pressure roller 52 is supported by the roller support portion 58 of the pressure operation mechanism portion 53, facing the discharge position of the tag label tape with print 109 form the cutaway portion.

The loop antenna LC (conceptually shown in Fig. 7) is arranged in the vicinity of the pressure roller 52 so that the pressure roller 52 is located at the center in the radial direction (inside the radial direction. In detail, on the coil center axis X, which will be described later), and an access (information reading or information writing) is made to the RFID circuit element To provided at the tag label tape with print 109 by magnetic induction (including electromagnetic induction, magnetic coupling and other non-contact contact methods through a magnetic field).

Fig. 8 is a perspective view illustrating an appearance of the internal unit 20 in the state where the label discharge mechanism 22 is removed from the structure shown in Fig. 3.

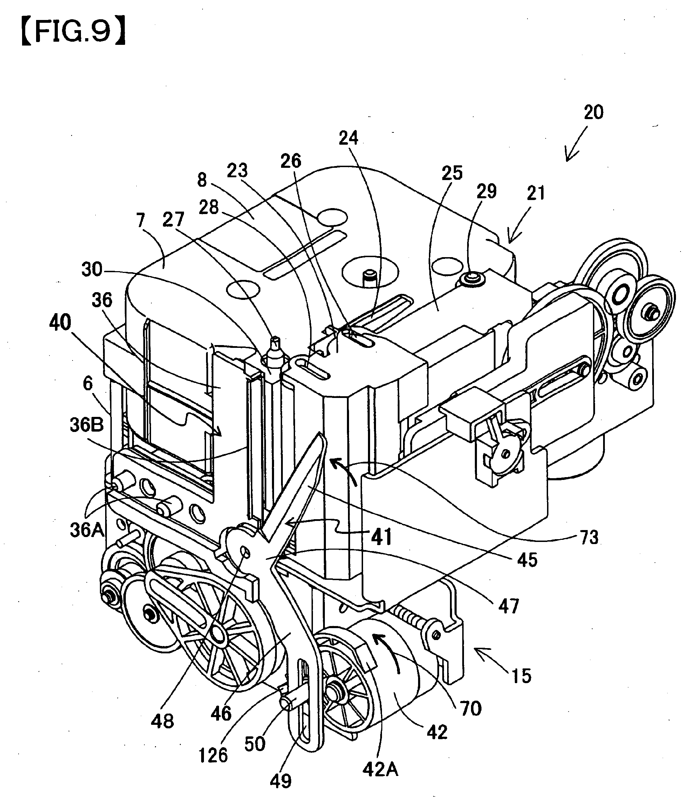

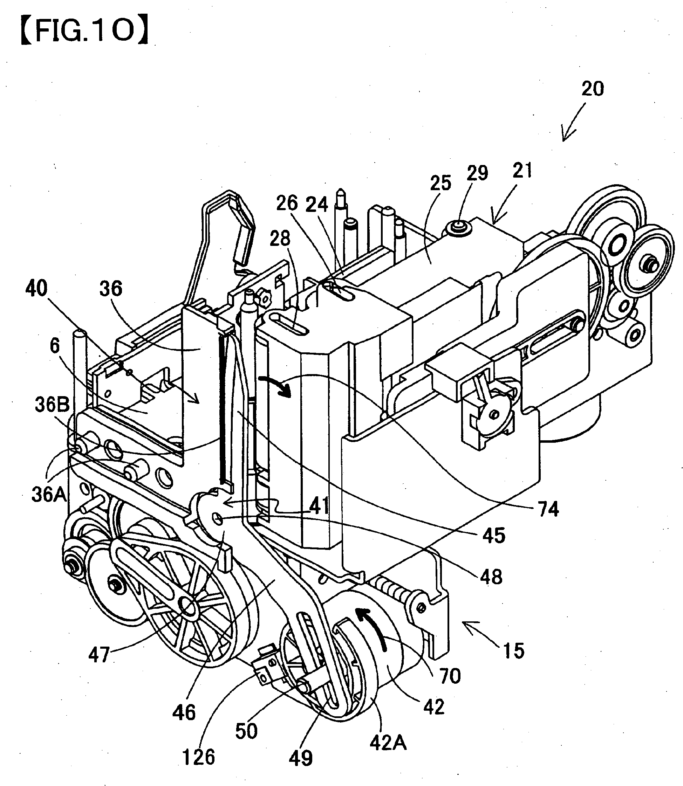

In Fig. 8, a boss 50 formed in the projected state is provided at the cutter helical gear 42, and this boss 50 is inserted into a long hole 49 of the movable cutter 41 (See also Figs. 9 and 10, which will be described later). Also, on the downstream side of the fixed blade 40 and the movable cutter 41 along the tape discharge direction, the half cut unit 35 is mounted so as to be located between the fixed blade 40 and the movable cutter 41 as well as the first guide walls 55, 56 (See Fig. 4).

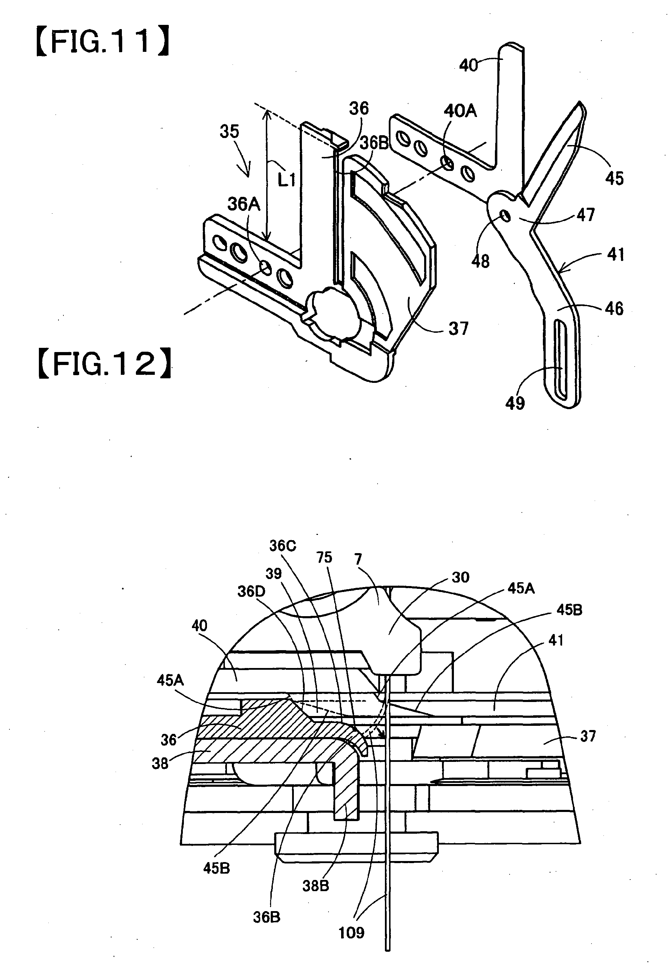

The half cut unit 35 comprises a cradle 38 arranged in accordance with the fixed blade 40, a half cutter 34 arranged opposite to the cradle 38 and on the movable cutter 41 side, a first guide portion 36 arranged in accordance with the fixed blade 40 between the fixed blade 40 and the cradle 38, and a second guide portion 37 arranged opposite to the first guide portion 36 and in accordance with the movable cutter 41 (See also fig. 11, which will be described later).

The first guide portion 36 and the second guide portion 37 are integrally constructed and mounted on a side plate 44 (See Fig. 4) with the fixed blade 40 by a guide fixing portion 36A provided at a position corresponding to a fixing hole 40A (See Fig. 11, which will be described later) of the fixed blade 40.

In the cradle 38, an end opposite to the tag label tape with print 109 discharged from the tape discharge portion 30 is bent so that the end becomes in parallel with the tape so as to form a receiving surface 38B. The tag label tape with print 109 is, as mentioned above, in the 5-layered structure made by sticking the cover film 103 to the four-layered structure of the adhesive layer 101a, the base film 101b, the adhesive layer 101c, and the release paler 101d (See also Fig. 19, which will be described later). And by pressing the half cutter 34 onto the receiving surface 38B, the tag label tape with print 109 between the half cutter 34 and the receiving surface 38B is cut in the cover film 103, the adhesive layer 101a, the base film 101b, and the adhesive layer 101c with the release paler 101d remained uncut. The receiving surface 38B also plays a role to guide the tag label tape with print 109 to the label discharge port 11 along with the first guide portions 55, 56.

Figs. 9 and 10 show perspective views illustrating an appearance of the cutting mechanism 15 when the half cutter 34 is removed from the internal unit 20.

In Figs. 9 and 10, at the cutting mechanism 15, when the cutter helical gear 42 is rotated by the cutter motor 43 (See Fig. 3), the movable cutter 41 is made to swing by the boss 50 and the long hole 49 with a shaft hole 48 as the fulcrum so that the tag label tape with print 109 is cut.

That is, first, when the boss 50 of the cutter helical gear 42 is located inside (left side in Fig. 9), the movable cutter 41 is located away from the fixed blade 40 (hereinafter this state shall be referred to as the initial state. See Fig. 9). And when the cutter motor 43 is driven in this initial state and the cutter helical gear 42 is rotated counterclockwise (arrow 70 direction), the boss 50 is moved outward, the movable cutter 41 is rotated counterclockwise around the shaft hole 48 (arrow 73 direction) so as to cut the tag label tape with print 109 together with the fixed blade 40 fixed at the internal unit 20 (hereinafter this state is referred to as the cut state. See Fig. 10).

After the RFID label is created by cutting the tag label tape with print 109 in this way, it is necessary to return the movable cutter 41 to the initial state that cuts the tag label tape with print 109 to be conveyed next time. Thus, the cutter motor 43 is driven again and the cutter helical gear 42 is rotated counterclockwise (arrow 70 direction) so that the boss 50 is moved inward, the movable cutter 41 is rotated clockwise (arrow 74 direction) and the movable cutter 41 is separated from the fixed blade 40 (See Fig. 9). Then, the tag label tape with print 109 printed by the cartridge 7 and conveyed next time becomes capable of being cut.

At this time, a cam 42A that cuts helical gear is provided on the cylindrical outer wall of the cutter helical gear 42, and when the cutter helical gear 42 is rotated by the cutter motor 43, a micro switch 126 provided adjacently to the cutter helical gear 42 is switched from the on state to the off state by action of the cam 42A that cuts helical gear. By this, the cut state of the tag label tape with print 109 can be detected.

Fig. 11 is a perspective view illustrating the detailed structure of the movable cutter 41 and the fixed blade 40 along with the half cut unit 35, and Fig. 12 is a partially enlarged sectional view of that portion. In Figs. 11 and 12, the fixed blade 40 is fixed by a screw or the like, which is fixing means, at the side plate 44 (See fig. 4) provided in the standing state on the left side of the cartridge holder 6 in the printing mechanism 15 through the fixing hole 40A.

The movable cutter 41 is substantially in the V-shape and comprises a blade portion 45 provided at the cutting portion and a shank portion 46 located opposite to the blade portion 45 and a bent portion 47. The bent portion 47 is provided with the shaft hole 48 thereon and is supported by the side plate 44 at the shaft hole 48 so that the movable cutter 41 can be rotated with the bent portion 47 as the fulcrum. Also, the long hole 49 is provided at the shank portion 46 opposite to the blade portion 45 provided at the cut portion of the movable cutter 41. The blade portion 45 is formed by a two-stage blade, and its blade surface is constructed by two inclined surfaces with different inclination angles of a first inclined surface 45A whose thickness is gradually thinned and a second inclined surface 45B.

On the other hand, an end 36B opposite to the tag label tape with print 109 to be discharged in the first guide portion 36 of the above-mentioned half cut unit 35 is projected along the receiving surface 38B formed at the end of the cradle 38 and bent in the discharge direction of the tag label tape with print 109. Therefore, the end 36B of the first guide portion 36 has a smooth curved surface with respect to the discharge direction of the tag label tape with print 109 in a contact surface 36C with the tag label tape with print 109 to be discharged from the cartridge 7.

By projecting the end 36B of the first guide portion 36 and making the contact surface 36C in the curved surface, the tip end portion of the tag label tape with print 109 curled more than a certain radius of curvature first hits the contact surface 36C of the first guide portion 36. At that time, the tip end portion of the tag label tape with print 109 hits the downstream side in the discharge direction of the tag label tape with print 109 from a boundary point 75 on the contact surface 36C of the first guide portion (lower direction in Fig. 12), the tip end portion of the tag label tape with print 109 is moved to the downstream side along the curved surface and guided to the direction of the label discharge port 11 without intruding between the fixed blade 40 and the first guide portion 36 or the cradle 38.

Also, the first guide portion 36 is formed so that a guide width L1 corresponding to the conveying path of the tag label tape with print 109 (See Fig. 11) is larger than the maximum width (36 mm in this embodiment) of the tag label tape with print 109 to be attached and an internal surface 36D is formed continuously to the contact surface 36C. The internal surface 36D is formed opposite to the first and the second inclined surfaces 45A, 45B of the movable cutter 41 (the detail will be described later), and a part of the first and the second inclined surfaces 45A, 45B of the movable cutter 41 is brought into contact at cutting (See Fig. 12). Since the movable cutter 41 has its blade portion formed by the two-stage blade, when the tag label tape with print 109 is cut by the movable cutter 41, a gap 39 is formed between the contact surface 36C and the internal surface 36D, which are the end portion of the first guide portion 36, and the second inclined surface 45B of the movable cutter 41 (See Fig. 12).

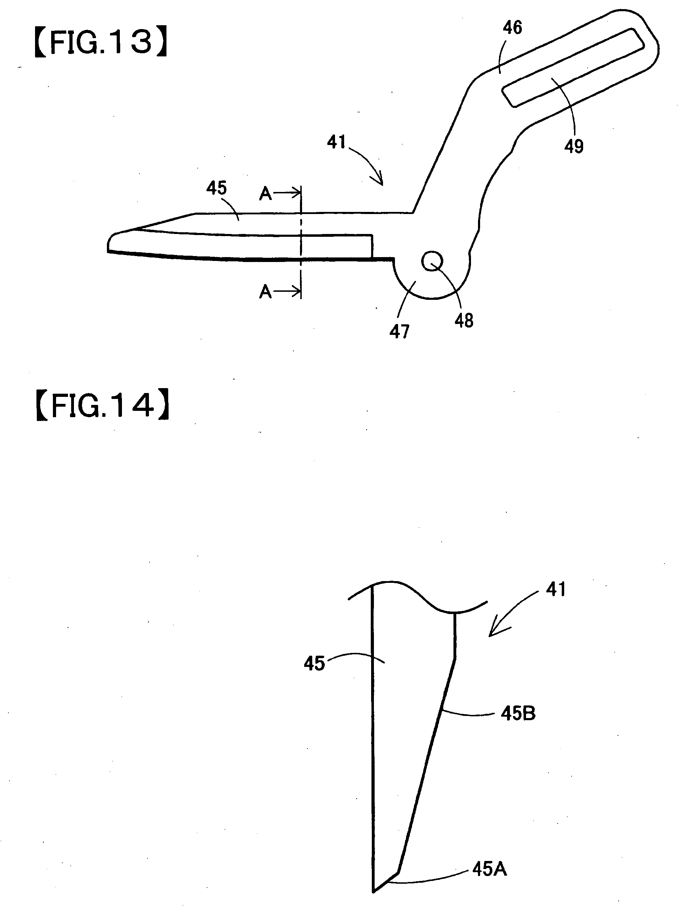

Fig. 13 is a front view illustrating an appearance of the movable cutter 41, and Fig. 14 is a cross sectional view of an A-A section in Fig. 13.

In Figs. 13 and 14, the first inclined surface 45A in this embodiment forms an angle of 50 degrees with the back face opposite to the first inclined face 45A of the blade portion 45.

Fig. 15 is a functional block diagram illustrating a control system of the tag-label producing device 1 of this embodiment. In Fig. 15, on a control board (not shown) of the tag-label producing device 1, a control circuit 110 is arranged.

At the control circuit 110, a CPU 111 provided with a timer 111A and that controls each device, an input/output interface 113 connected to this CPU 111 through a data bus 112, a CGROM 114, ROM 115, 116, and a RAM 117 are provided.

At the CGROM 114, dot patterns for display are stored in correspondence with code data for each of a large number of characters.

In the ROM (dot pattern data memory) 115, the dot pattern data that prints is classified by font (gothic fonts, Min dynasty fonts and the like) and each font is stored according to printing character size and code data for each of the large number of characters that print characters such as alphabetical characters and symbols. Also, graphic pattern data is stored that prints graphic images including graduation rendering.

In the ROM 116, a printing driving control program that drives the printing head 23, the feeding motor 119, and the tape dischaging motor 65 by reading out data of a printing buffer in correspondence with the code data of characters such as letters, numerals and the like inputted from the PC 118, a pulse-number determining program that determines the number of pulses corresponding to a forming energy amount of each printing dot, a cutting driving control program that conveys the tag label tape with print 109 to the cut position by driving the feeding motor 119 when printing is finished and cutting the tag label tape with print 109 by driving the cutter motor 43, and a tape discharge program that forcedly discharges the tag label tape with print 109 which has been cut (= RFID label T) by driving the tape dischaging motor 65, and other various programs required for control of the tag-label producing device 1 are stored. The CPU 111 executes various calculations based on the various programs stored in the ROM 116.

In the RAM 117, a text memory 117A, a printing buffer 117B, a parameter storage area 117E and the like are provided. In the text memory 117A, document data inputted from the PC 118 is stored. In the printing buffer 117B, the dot patterns that print such as a plurality of characters and symbols and applied pulse number, which is a forming energy of each dot, are stored as the dot pattern data, and the printing head 23 carries out dot printing according to the dot pattern data stored in this printing buffer 117B. In the parameter storage area 117E, various calculation data is stored.

To the input/output interface 113, the PC 118, the printing driving circuit 120 that drives the printing head 23, a feeding motor driving circuit 121 that drives the feeding motor 119, a cutter motor driving circuit 122 that drives the cutter motor 43, a tape dischaging motor driving circuit 123 that drives the tape dischaging motor 65, the transmission circuit 306 that generates a carrier wave that makes an access (reading/writing) to the RFID circuit element To through the loop antenna LC and that modulates the carrier wave based on a control signal inputted from the control circuit 110, a receiving circuit 307 that demodulates a response signal received through the loop antenna LC from the RFID circuit element To and outputting it to the control circuit 110, a tape cut sensor 124, and a cut release detection sensor 125, respectively.

In a control system centered on the control circuit 110, when character data is inputted through the PC 118, the text (document data) is sequentially stored in the text memory 117A, the printing head 23 is driven through the driving circuit 120, and each of the heater elements is selectively heated/driven in correspondence with printing dots for one line that prints the dot pattern data stored in the printing buffer 117B, in synchronization with which the feeding motor 119 carries out conveying control of the tape through the driving circuit 121. Also, transmission circuit 306 carries out modulation control of the carrier wave based on the control signal from the control circuit 110, and the receiving circuit 307 performs processing of the demodulated signal based on the control signal from the control circuit 110.

Also, the tape cut sensor 124 and the cut release detection sensor 125 are constituted by the cam 42A for cutter helical gear provided on the cylindrical outer wall of the cutter helical gear 42 and the micro switch 126 (See Figs. 9 and 10). Specifically, when the cutter helical gear 42 is rotated by the cutter motor 43, the micro switch 126 is switched from the off state to the on state by action of the cam 42A for cutter helical gear so as to detect that cutting of the tag label tape with print 109 by the movable cutter 45 has been finished. By this, the tape cut sensor 124 is constituted. Also, if the cutter helical gear 42 is further rotated, the micro switch 126 is switched from the on state to the off state by action of the cam 42A for cutter helical gear so as to detect that the movable cutter 45 has returned to the release position. By this, the cut release detection sensor 125 is constituted.

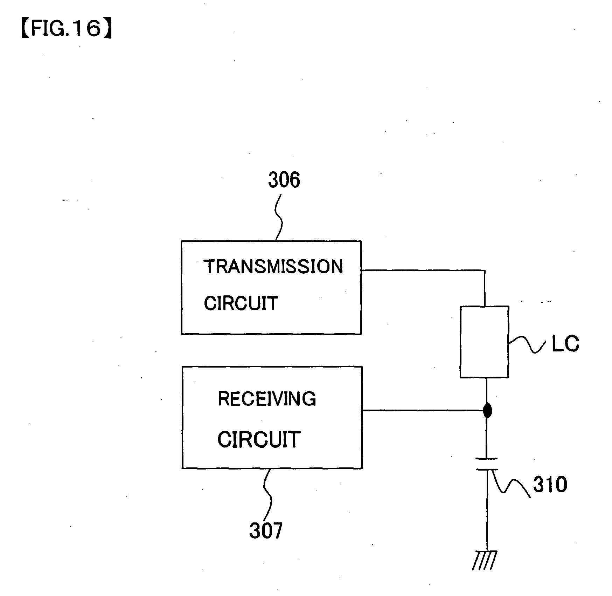

Fig. 16 is a circuit diagram schematically illustrating a circuit configuration of a connection portion between the receiving circuit 307 and the loop antenna LC. In Fig. 16, the transmission circuit 306 is connected to the device-side loop antenna LC, while the receiving circuit 307 is connected to a capacitor 310 connected in series to the device-side loop antenna LC.

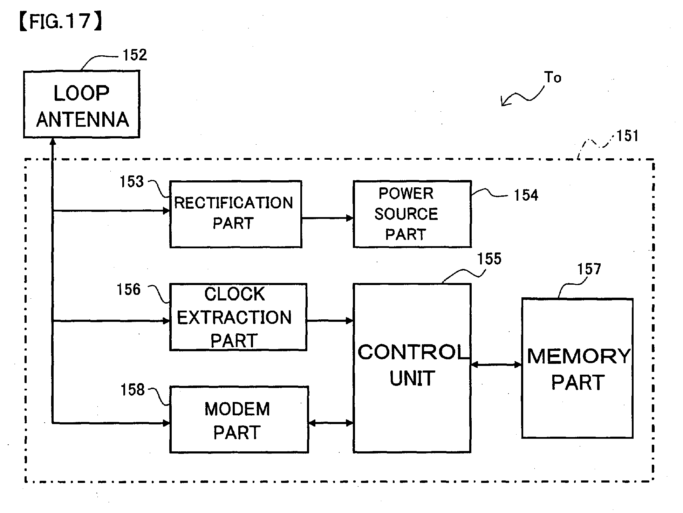

Fig. 17 is a functional block diagram illustrating a functional configuration of the RFID circuit element To. In Fig. 17, the RFID circuit element To has the loop antenna 152 that transmits/receives of a signal in a non-contact manner with the loop antenna LC on the tag-label producing device 1 by magnetic induction and the IC circuit part 151 connected to the loop antenna 152.

The IC circuit part 151 comprises a rectification part 153 that rectifies the carrier wave received by the loop antenna 152, a power source part 154 that accumulates energy of the carrier wave rectified by the rectification part 153 so as to make it a driving power supply, a clock extraction part 156 that extracts a clock signal from the carrier wave received by the loop antenna 152 so as to supply it to a control unit 155, a memory part 157 which can store a predetermined information signal, a modem part 158 connected to the loop antenna 152, and the control unit 155 that controls operation of the RFID circuit element To through the rectification part 153, the clock extraction part 156, the modem part 158 and the like.

The modem part 158 demodulates a communication signal from the loop antenna LC of the tag-label producing device 1 received from the loop antenna 152 and modulates/reflects the carrier wave received from the loop antenna 152 based on the response signal from the control unit 155.

The control unit 155 interprets a received signal demodulated by the modem part 158, generates a reply signal based on the information signal stored in the memory part 157, and executes basic control such as control of reply by the modem part 158.

Figs. 18A and 18B are views illustrating an example of the appearance of the RFID label T formed after information writing (or reading) of the RFID circuit element To and cutting of the tag label tape with print 109 by the tag-label producing device 1 constructed as above have been finished, in which Fig. 18A is a top view and Fig. 18B is a bottom view. Fig. 19 is a diagram obtained by rotating a cross sectional view of the IXX-IXX' section in Fig. 18 counterclockwise by 90 degrees.

In Figs. 18A, 18B and 19, the RFID label T is in the 5-layered structure in which the cover film 103 is added to the 4-layered structure shown in Fig. 5 as mentioned above made of four layers of the cover film 103, the adhesive layer 101a, the base film 101b, the adhesive layer 101c and the separation sheet 101d from the cover film 103 side (upper side in Fig. 19) to the opposite side (lower side in Fig. 19). And as mentioned above, the RFID circuit element To including the loop antenna 152 provided on the back side of the base film 101b (specifically, the sheet-state antenna base on which this RFID circuit element To is arranged. The same applies to the following) is provided adjacently to the adhesive layer 101c, and the printing R (in this example, the letters of "RF-ID" indicating the type of the RFID label T) is printed on the back face of the cover film 103.

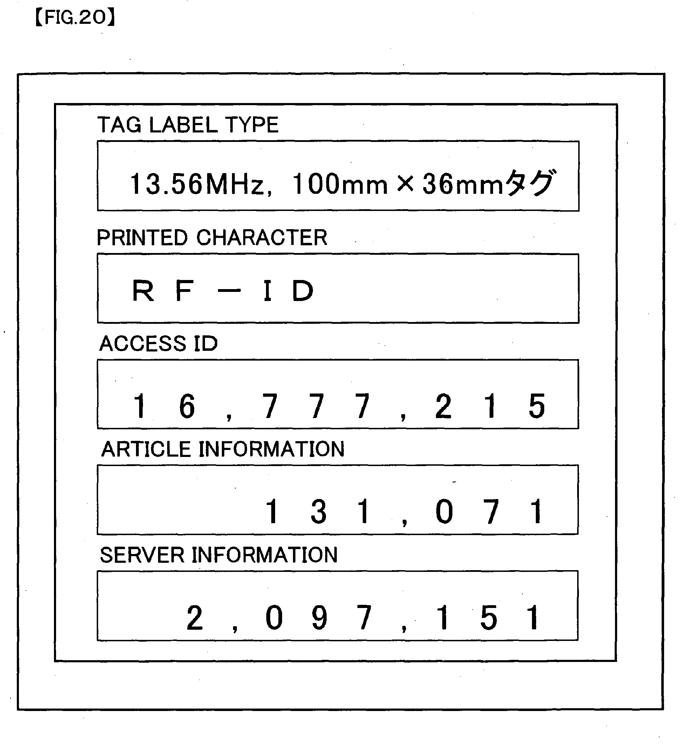

Fig. 20 is a view showing an example of a screen displayed on the PC 118 (the terminal 118a or the general-purpose computer 118b) at an access (reading or writing) to the RFID tag information of the IC circuit part 151 in the RFID circuit element To by the above-mentioned tag-label producing device 1.

In Fig. 20, in this example, the type of the tag label (access frequency and tape dimension), the printing R printed in correspondence with the RFID circuit element To, an access (reading or writing) ID, which is identification information (tag ID) specific to the RFID circuit element To, an address of the article information stored in the information server IS, and an address of a storage destination of the corresponding information in the route server RS can be displayed on the PC 118. And the tag-label producing device 1 is operated by operation of the PC 118, and the information such as the writing ID and the article information is written in the IC circuit part 151 (or, the information such as the reading ID or the article information stored in the IC circuit part 151 in advance is read out).

At the above reading or writing, correspondence between the tag ID of the RFID circuit element To of the created RFID label T and the information read out of the IC circuit part 151 of the RFID label T (or information written in the IC circuit part 151) is stored in the above-mentioned route server RS to be referenced as necessary.

In the tag-label producing device 1 constructed as above of this embodiment, the predetermined label printing R is made by the printing head 23 on a printing area S of the cover film 103, the printed label tape 109 in the laminated structure of three layers including the cover film 103, the adhesive layer 101c, and the separation sheet 101d covering this is conveyed, and transmission/receiving of the information is made in the non-contact manner from the loop antenna LC to the RFID circuit element To provided at the printed label tape 109. Then, reading or writing of the information is carried out, and the printed label tape 109 is cut by the cutting mechanism 15 to a predetermined length so as to create the RFID label T.

When the tag label tape with print 109 with print (RFID label T) using the tag tape in the laminated structure including substantially the sheet-state antenna base provided with the RFID circuit element To as in this embodiment, the cover film 103 provided on the front side in the thickness direction in the laminated structure and to which the predetermined printing is applied and the RFID circuit element To provided at the intermediate portion in the thickness direction are required, and at least one adhesive layer that sticks the RFID circuit element To and the cover film 103 together or that sticks the entire label to the object to be stuck is separately needed. However, an acid component contained in the normal adhesive used in the adhesive layer can give an adverse effect on the corrosion resistance and durability of the RFID circuit element To and the article to be stuck or the like. Articles to be stuck particularly subjected to the effect include metal, paper, fiber or living organism (living body), for example. The normal adhesives containing the acid component include an acrylic adhesive, an emulsion adhesive and the like.

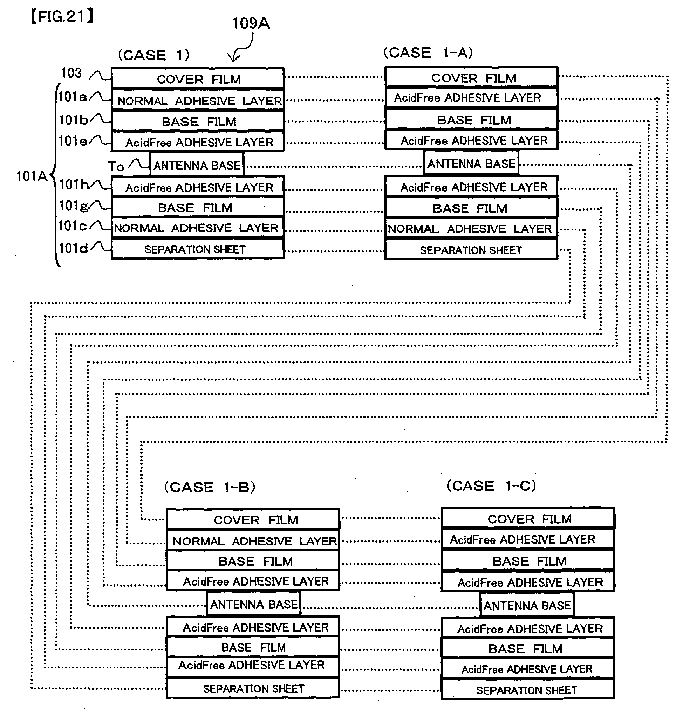

The present invention is to solve the nonconformity, and its most distinctive characteristic is that an adhesive not containing an acid component (hereinafter referred to as "Acid Free adhesive") is used as an adhesive to be used in an adhesive layer (particularly the adhesive layer adjacent to the RFID circuit element To and the adhesive layer to be the adhesive surface of the article to be stuck). Here, the "acid free adhesive" is an adhesive made up mainly of a copolymer in which any of acrylic, rubber, silicon or other monomers is copolymerized, not including unsaturated carboxylic acid (acrylic acid, methacrylic acid, itaconic acid, maleic acid and the like, for example), whether various additives (cross-linkers, tackifiers, fillers, stabilizers, pigments and the like) are mixed or not. The inventors have created the tag label tape with print 109 (RFID label T) as shown in Fig. 21 and after by constituting at least one of the adhesive layers by an "acid free adhesive". The detail will be described below.

Fig. 21 is a diagram schematically illustrating an example (hereinafter referred to as "case 1") of a layered structure of a tag label tape with print 109A (base tape 101A). As shown in Fig. 21, in the case 1, the base tape 101A comprises an adhesive layer 101a, a base film 101b, an adhesive layer 101e, an adhesive layer 101h, a base film 101g, an adhesive layer 101c, and a separation sheet 101d from the front side (upper side in Fig. 21), and the RFID circuit element To (specifically, the sheet-state antenna base on which the RFID circuit element To is arranged. The same applies to the following) is provided to be held between the adhesive layer 101e and the adhesive layer 101h. On the front side of the base tape 101A constructed as above, the cover film 103 is stuck through the adhesive layer 101a and the tag label tape with print 109A is formed. In the construction of the case 1, an "acid free adhesive" is used as an adhesive in the adhesive layer 101e and the adhesive layer 101h (hereinafter referred to as the "acid free adhesive layer"). A normal adhesive (an adhesive containing an unsaturated carboxylic acid other than the acid free adhesive) is used in the adhesive layer 101a and the adhesive layer 101c (hereinafter referred to as the "normal adhesive layer"). Also, as mentioned above, the RFID circuit element To is arranged on the antenna base specifically. However, in this Fig. 21, the antenna base given the reference numeral 'To' is only illustrated so as to prevent complication in Fig. 21. The same applies to the following figures.

By providing the acid free adhesive layer 101e and the acid free adhesive layer 101h adjacently to the RFID circuit element To in this way, corrosion resistance and durability of the RFID circuit element To can be improved. Also, the RFID circuit element To can be attached to the base film 101b through the acid free adhesive layer 101e, and the RFID circuit element To can be attached to the base film 101g through the acid free adhesive layer 101h. Also, the base film 101b and the base film 101g can be stuck together by portions located outside the RFID circuit element To of the acid free adhesive layer 101e and the acid free adhesive layer 101h. Lowering of the corrosion resistance and durability of the RFID circuit element To and the object to be stuck due to the adhesive protruding in the width direction at adhesion can be prevented.

Also, since the "acid free adhesive" is relatively expensive, by using the "acid free adhesive" for the adjacent adhesive layers adjacent to the RFID circuit element To (the acid free adhesive layer 101e and the acid free adhesive layer 101h here), for which the largest effect of improvement of the corrosion resistance and durability in the RFID circuit element To can be expected, while using the normal adhesive for the rest, the minimum corrosion resistance and durability improvement effect can be obtained while cost increase is restrained.

It is possible to replace the normal adhesive layer in the configuration of the case 1 by the acid free adhesive layer. It is shown in a case 1-A, a case 1-B, and a case 1-C. In these cases, the same effect as that of the case 1 can be obtained. Particularly, in the cases 1-B and 1-C, by providing the acid free adhesive layer 101c between the base film 101g and the separation sheet 101d, the entire label can be stuck to the object to be stuck by the acid free adhesive layer, and the corrosion resistance and durability of the object to be stuck can be improved.

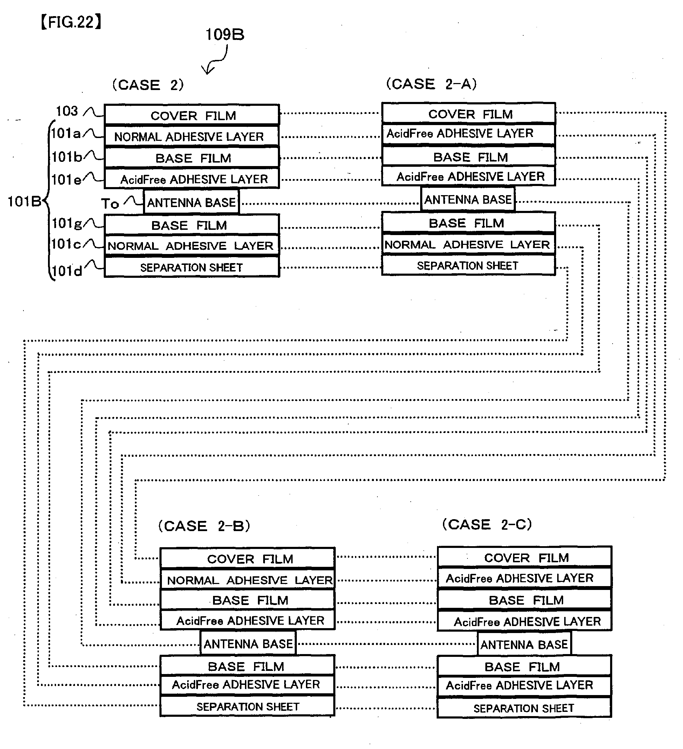

Fig. 22 is a diagram schematically illustrating an example (hereinafter referred to as "case 2") of a layered structure of a tag label tape with print 109B (base tape 101B). As shown in Fig. 22, in the case 2, the base tape 101B comprises the normal adhesive layer 101a, the base film 101b, the acid free adhesive layer 101e, the base film 101g, the normal adhesive layer 101c, and the separation sheet 101d from the front side (upper side in Fig. 22), and the RFID circuit element To (specifically, the sheet-state antenna base on which the RFID circuit element To is arranged. The same applies to the following) is provided to be held between the acid free adhesive layer 101e and the base film 101g. On the front side of the base tape 101B constructed as above, the cover film 103 is stuck through the normal adhesive layer 101a so that the tag label tape with print 109B is formed.

By providing the acid free adhesive layer 101e adjacently to the printed side of the RFID circuit element To in this way, corrosion resistance and durability of the RFID circuit element To can be improved. Also, the RFID circuit element To can be attached to the base film 101b through the acid free adhesive layer 101e, and the base film 101g can be stuck by a portion located outside the RFID circuit element To in the acid free adhesive layer 101e. Lowering of the corrosion resistance and durability of the RFID circuit element To and the object to be stuck due to the adhesive protruding in the width direction at adhesion can be prevented.

It is also possible in the case 2 to replace the normal adhesive layer by the acid free adhesive layer as in the case 1. It is shown in a case 2-A, a case 2-B, and a case 2-C. In these cases, the same effect as that of the case 2 can be obtained. Particularly, in the cases 2-B and 2-C, by providing the acid free adhesive layer 101c between the base film 101g and the separation sheet 101d, the entire label can be stuck to the object to be stuck by the acid free adhesive layer, and the corrosion resistance and durability of the object to be stuck can be improved.

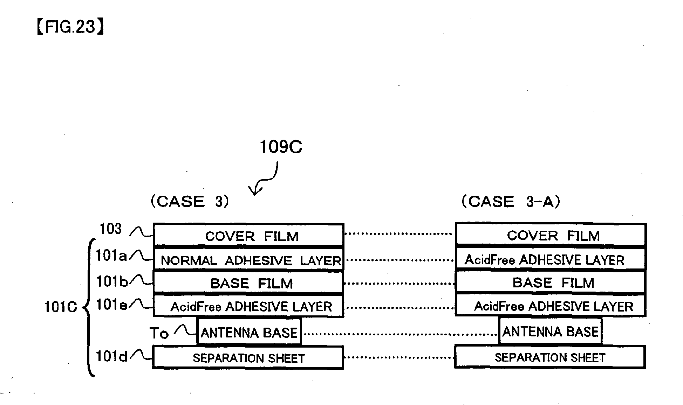

Fig. 23 is a diagram schematically illustrating an example (hereinafter referred to as "case 3") of a layered structure of a tag label tape with print 109C (base tape 101C). As shown in Fig. 23, in the case 3, the base tape 101C comprises the normal adhesive layer 101a, the base film 101b, the acid free adhesive layer 101e, and the separation sheet 101d from the front side (upper side in Fig. 23), and the RFID circuit element To (specifically, the sheet-state antenna base on which the RFID circuit element To is arranged. The same applies to the following) is provided to be held between the acid free adhesive layer 101e and the separation sheet 101d. On the front side of the base tape 101C constructed as above, the cover film 103 is stuck through the normal adhesive layer 101a and the tag label tape with print 109C is formed.

By providing the acid free adhesive layer 101e adjacently to the printed side of the RFID circuit element To in this way, corrosion resistance and durability of the RFID circuit element To can be improved. Also, the RFID circuit element To can be attached to the base film 101b through the acid free adhesive layer 101e, and the entire label can be stuck to the object to be stuck by a portion located outside the RFID circuit element To in the acid free adhesive layer 101e, by which corrosion resistance and durability of the object to be stuck can be improved. It is also possible in the case 3 to replace the normal adhesive layer by the acid free adhesive layer as in the cases 1 and 2. It is shown in a case 3-A. In this case, the same effect as that of the case 3 can be obtained.

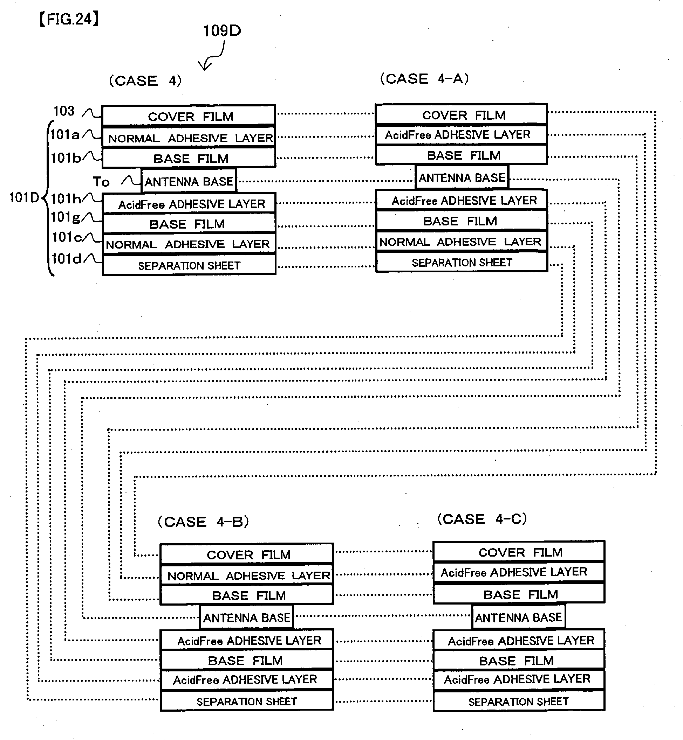

Fig. 24 is a diagram schematically illustrating an example (hereinafter referred to as "case 4") of a layered structure of a tag label tape with print 109D (base tape 101D). As shown in Fig. 24, in the case 4, the base tape 1010 comprises the normal adhesive layer 101a, the base film 101b, the acid free adhesive layer 101h, the base film 101g, the normal adhesive layer 101c, and the separation sheet 101d from the front side (upper side in Fig. 24), and the RFID circuit element To (specifically, the sheet-state antenna base on which the RFID circuit element To is arranged. The same applies to the following) is provided to be held between the base film 101b and the acid free adhesive layer 101h. On the front side of the base tape 101D constructed as above, the cover film 103 is stuck through the normal adhesive layer 101a and the tag label tape with print 109D is formed.

By providing the acid free adhesive layer 101h adjacently to the separation sheet side of the RFID circuit element To in this way, corrosion resistance and durability of the RFID circuit element To can be improved. Also, the RFID circuit element To can be attached to the base film 101g through the acid free adhesive layer 101h. Lowering of the corrosion resistance and durability of the RFID circuit element To and the object to be stuck due to the adhesive protruding in the width direction at adhesion can be prevented.

It is also possible in the case 4 to replace the normal adhesive layer by the acid free adhesive layer as in the cases 1, 2 and 3. It is shown in a case 4-A, a case 4-B, and a case 4-C. In this case, the same effect as that of the case 4 can be obtained. Particularly, in the cases 4-B and 4-C, by providing the acid free adhesive layer 101c between the base film 101g and the separation sheet 101d, the entire label can be stuck to the object to be stuck by the acid free adhesive layer, and the corrosion resistance and durability of the object to be stuck can be improved.

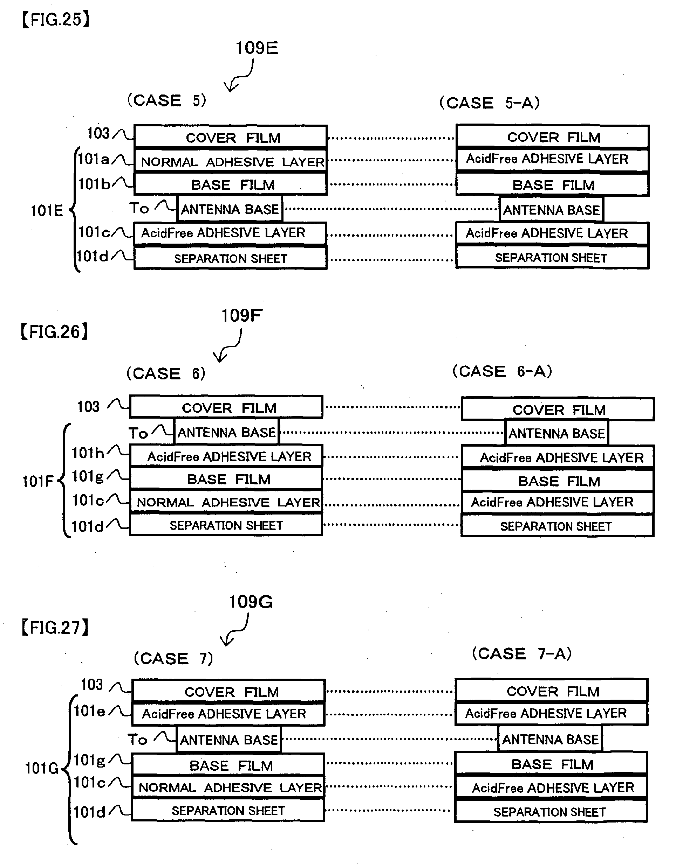

Fig. 25 is a diagram schematically illustrating an example (hereinafter referred to as "case 5") of a layered structure of a tag label tape with print 109E (base tape 101E). As shown in Fig. 25, in the case 5, the base tape 101E comprises the normal adhesive layer 101a, the base film 101b, the acid free adhesive layer 101c, and the separation sheet 101d from the front side (upper side in Fig. 25), and the RFID circuit element To (specifically, the sheet-state antenna base on which the RFID circuit element To is arranged. The same applies to the following) is provided to be held between the base film 101b and the acid free adhesive layer 101c. On the front side of the base tape 101E constructed as above, the cover film 103 is stuck through the normal adhesive layer 101a and the tag label tape with print 109E is formed.

By providing the acid free adhesive layer 101c adjacently to the separation sheet side of the RFID circuit element To in this way, corrosion resistance and durability of the RFID circuit element To can be improved. Also, the entire label can be stuck to the object to be stuck by the acid free adhesive layer 101c covering substantially the entire separation sheet sides of the base film 101b and the RFID circuit element To, by which corrosion resistance and durability of the object to be stuck can be improved. It is also possible in the case 5 to replace the normal adhesive layer by the acid free adhesive layer as in the cases 1, 2, 3 and 4. It is shown in a case 5-A. In this case, the same effect as that of the case 5 can be obtained.

Also, the construction of the case 5 corresponds to the layered structure of the base tape 101 (See Fig. 5) and the created tag label tape with print 109 (or the RFID label T. See Fig. 19) used in the above embodiment.

Fig. 26 is a diagram schematically illustrating an example (hereinafter referred to as "case 6") of a layered structure of a tag label tape with print 109F (base tape 101F). As shown in Fig. 26, in the case 6, the base tape 101F comprises the acid free adhesive layer 101h, the base film 101g, the normal adhesive layer 101c, and the separation sheet 101d from the front side (upper side in Fig. 26). And the cover film 103 is stuck to the front side of the base tape 101F constructed as above by a portion outside the RFID circuit element To in the acid free adhesive layer 101h, and the RFID circuit element To (specifically, the sheet-state antenna base on which the RFID circuit element To is arranged. The same applies to the following) is provided to be held between the cover film 103 and the acid free adhesive layer 101h and the tag label tape with print 109F is formed.

By providing the acid free adhesive layer 101h adjacently to the separation sheet side of the RFID circuit element To in this way, corrosion resistance and durability of the RFID circuit element To can be improved. Also, the RFID circuit element To can be attached to the base film 101g through the acid free adhesive layer 101h, and the cover film 103 can be stuck by a portion located outside the RFID circuit element To in the acid free adhesive layer 101h. Lowering of the corrosion resistance and durability of the RFID circuit element To and the object to be stuck due to the adhesive protruding in the width direction at adhesion can be prevented.

It is also possible in the case 6 to replace the normal adhesive layer by the acid free adhesive layer as in the case 1 and the like. It is shown in a case 6-A. In this case, the same effect as that of the case 5 can be obtained. Particularly, in the case 6-A, by providing the acid free adhesive layer 101c between the base film 101g and the separation sheet 101d, the entire label can be stuck to the object to be stuck by the acid free adhesive layer, and the corrosion resistance and durability of the object to be stuck can be improved.

Fig. 27 is a diagram schematically illustrating an example (hereinafter referred to as "case 7") of a layered structure of a tag label tape with print 109G (base tape 101G). As shown in Fig. 27, in the case 7, the base tape 101G comprises the acid free adhesive layer 101e, the base film 101g, the normal adhesive layer 101c, and the separation sheet 101d from the front side (upper side in Fig. 27), and the RFID circuit element To (specifically, the sheet-state antenna base on which the RFID circuit element To is arranged. The same applies to the following) is provided to be held between the acid free adhesive layer 10le and the base film 101g. And the cover film 103 is attached to the front side of the base tape 101G constructed as above through the acid free adhesive layer 101e and the tag label tape with print 109G is formed.

By providing the acid free adhesive layer 101e adjacently to the printed side of the RFID circuit element To in this way, corrosion resistance and durability of the RFID circuit element To can be improved. Also, they can be stuck to the cover film 103 by the acid free adhesive layer 101e covering substantially the entire printed sides of the base film 101g and the RFID circuit element To, and lowering of the corrosion resistance and durability of the RFID circuit element To and the object to be stuck due to the adhesive protruding in the width direction at adhesion can be prevented.

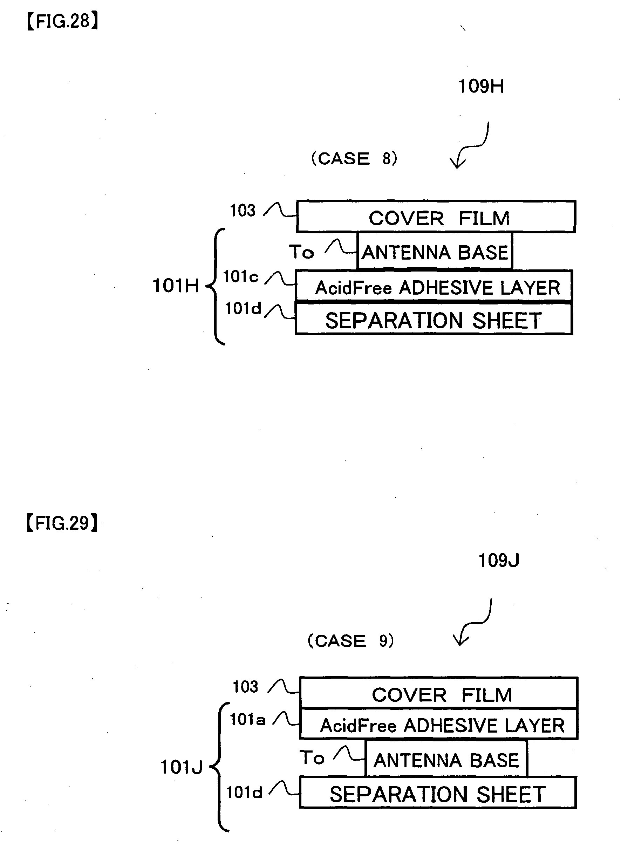

Fig. 28 is a diagram schematically illustrating an example (hereinafter referred to as "case 8") of a layered structure of a tag label tape with print 109H (base tape 101H). As shown in Fig. 28, in the case 8, the base tape 101H comprises the acid free adhesive layer 101c and the separation sheet 101d from the front side (upper side in Fig. 28). And the cover film 103 is attached to the front side of the base tape 101H constructed as above through the acid free adhesive layer 101c, and the RFID circuit element To (specifically, the sheet-state antenna base on which the RFID circuit element To is arranged. The same applies to the following) is provided to be held between the cover film 103 and the acid free adhesive film 101c and the tag label tape with print 109H is formed.

By providing the acid free adhesive layer 101c adjacently to the separation sheet side of the RFID circuit element To in this way, adverse effect of the acid component as with the normal adhesive on the RFID circuit element To can be prevented. Also, the entire label can be stuck to the object to be stuck by the acid free adhesive layer 101c covering substantially the entire separation sheet sides of the cover film 103 and the RFID circuit element To, and the adverse effect of the acid component as with the normal adhesive on the corrosion resistance and durability of the object to be stuck can be prevented.

Fig. 29 is a diagram schematically illustrating an example (hereinafter referred to as "case 9") of a layered structure of a tag label tape with print 109J (base tape 101J). As shown in Fig. 29, in the case 9, the base tape 101J comprises the acid free adhesive layer 101a and the separation sheet 101d from the front side (upper side in Fig. 29). And the RFID circuit element To (specifically, the sheet-state antenna base on which the RFID circuit element To is arranged. The same applies to the following) is provided to be held between the acid free adhesive layer 101a and the separation sheet 101d. And the cover film 103 is stuck to the front side of the base tape 101J constructed as above through the acid free adhesive layer 101a and the tag label tape with print 109J is formed.

By providing the acid free adhesive layer 101a adjacently to the printed side of the RFID circuit element To in this way, adverse effect of the acid component as with the normal adhesive on the RFID circuit element To can be prevented. Also, the entire label can be stuck to the object to be stuck by a portion located outside the RFID circuit element To, and the adverse effect of the acid component as with the normal adhesive on the corrosion resistance and durability of the object to be stuck can be prevented.

As mentioned above, particularly in the constructions of the cases 1, 2 and 4, the base films 101b, 101g are provided on both sides in the thickness direction so as to hold the RFID circuit element To between them. By constituting so that the RFID circuit element To is arranged between the base film 101b and the base film 101g, even when a user peels off the separation sheet 101d after formation of the RFID label T, such a structure can be obtained that the RFID circuit element To is not directly seen by means of the base film 101g.

Also, particularly in this embodiment, the tag label tape with print 109 is constituted by sticking the cover film 103 on which desired printing is made to the front side of the base tape 101 through the adhesive layer 101a (or the adhesive layer 101h or the adhesive layer 101c or the adhesive layer 101e). By making the tag label tape with print 109 in the bonded structure in which the base tape 101 and the cover film 103 are stuck together, it becomes possible to be stuck to the cover film 103 after printing from the stuck side (side to be stuck with the base tape 101) as in this embodiment, and in this case, the tag label tape with print which is resistant against stain or moisture can be realized since the printed surface is not exposed to the tape surface.

The present invention is not limited to the above embodiments, but various variations are possible in a range not departing from its gist and technical idea. Those variations will be sequentially described below.

### (1) If tape is not stuck together:

That is, as described in the above embodiment, a case where the present invention is applied to a cartridge for the tag-label producing device for direct printing on the cover film provided on the tag tape, not the laminated type that printing is applied on the cover film 103 different from the base tape 101 provided with the RFID circuit element To and they are stuck together.

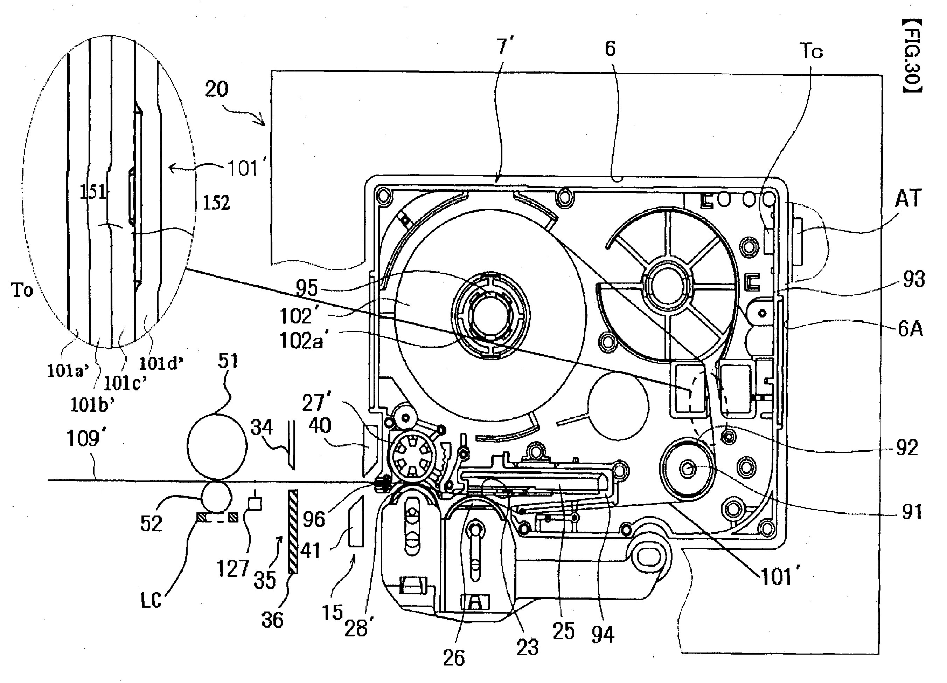

Fig. 30 is a plan view illustrating a detailed structure of a cartridge 7' of this variation and corresponds to the above-mentioned Fig. 5. The same reference numerals are given to the portions equivalent to those in Fig. 5 and the like and the description will be omitted as appropriate.

In Fig. 30, the cartridge 7' has a first roll 102' around which a thermal tape 101' is wound and a tape feeding roller 27' that feeds the thermal tape 101' in the direction outside the cartridge 7'.

The first roll 102' has the band-state transparent thermal tape 101' on which a plurality of the RFID circuit elements To are sequentially formed in the longitudinal direction wound around a reel member 102a'. The reel member 102a' is rotatably fitted and stored in a boss 95 installed upright on the bottom surface of the cartridge 7'.

The thermal tape 101' wound around the first roll 102' is in the four-layered structure in this example (See a partially enlarged view in Fig. 30) in which a cover film (thermal cover film) 101a' made of polyethylene terephthalate (PET) and the like having a thermal recording layer on the surface, a colored base film 101b' made of polyethylene terephthalate (PET) and the like, an adhesive layer 101c' made of an acid free adhesive, and a separation sheet 101d' are laminated from the side wound inside (left side in Fig. 30) toward the opposite side (right side in Fig. 30).

On the back side of the cover film 101a' (right side in Fig. 30), the base film 101b' is laminated. Also, on the back side of this base film 101b', the separation sheet 101d' is stuck through the adhesive layer 101c', and the RFID circuit element To (specifically, the sheet-state antenna base on which the RFID circuit element To is arranged. The same applies to the following) comprised by the loop antenna 152 constructed in the loop-coil shape that transmits/receives of information and the IC circuit part 151 is provided between the adhesive layer 101c' and the separation sheet 101d'. When the cartridge 7' is attached to the cartridge holder 6 and the roller holder 25 is moved from the separated position to the contact position, the thermal tape 101' is held between the printing head 23 and the platen roller 26 and between a tape feeding roller 27' and a sub roller 28'. And the tape feeding roller 27', the sub roller 28' and the platen roller 26 are rotated in synchronization, and the thermal tape 101' is fed out of the first roll 102'.

The fed-out thermal tape 101' supplied from an opening portion 94 to the printing head 23 on the downstream side in the conveying direction while being guided by the substantially cylindrical reel 92 fitted and inserted rotatably into a reel boss 91 installed upright on the cartridge bottom surface. The printing head 23 has its plurality of heating elements electrified by the above-mentioned printing driving circuit 120 (See Fig. 15), by which the label printing R is printed on the surface of the cover film 101a' of the thermal tape 101' and formed as the tag label tape with print 109' and then, conveyed out of the cartridge 7' from the discharge port 96.

After conveying out of the cartridge 7', an access (information reading/writing) of the IC circuit part 151 through the above-mentioned loop antenna LC is carried out. After that, it is only necessary to carry out the conveyance by the driving roller 51, cutting by the cutting mechanism 15 and the like similarly to the above embodiments, and the description will be omitted.

The half cut unit 35 is different from those corresponding to the so-called laminate type described in Fig. 10 and the like. That is, in the construction described in Fig. 10 and the like, the cradle 36 is located on the printing head 23 side, while the half cutter is on the platen roll 26 side. This is the construction that carries out half-cut from the surface opposite to the separation sheet of the created tape. However, when the thermal tape is used as in this variation (also when the ink ribbon is used in the type not using the laminate, which will be described later), the separation sheet is located on the side opposite to that of the laminate type. Therefore, in order to apply the half-cut to a portion other than the separation sheet, arrangement of the cradle 36 and the half cutter 34 is made opposite. That is, the half cutter 34 is located on the printing head 23 side, while the cradle 36 on the platen roller 26 side.

In this example, in order to enable automatic detection on the device side of cartridge type information and the like on the cartridge 7', an RFID circuit element Tc for cartridge storing the information on the cartridge 7' in advance is disposed on an outer circumferential wall surface 93 of the cartridge 7'. Also, on a side wall portion 6A opposite to the RFID circuit element Tc in the cartridge holder 6, an antenna AT is provided that transmits/receives of a signal through non-contact radio communication with the RFID circuit element Tc.

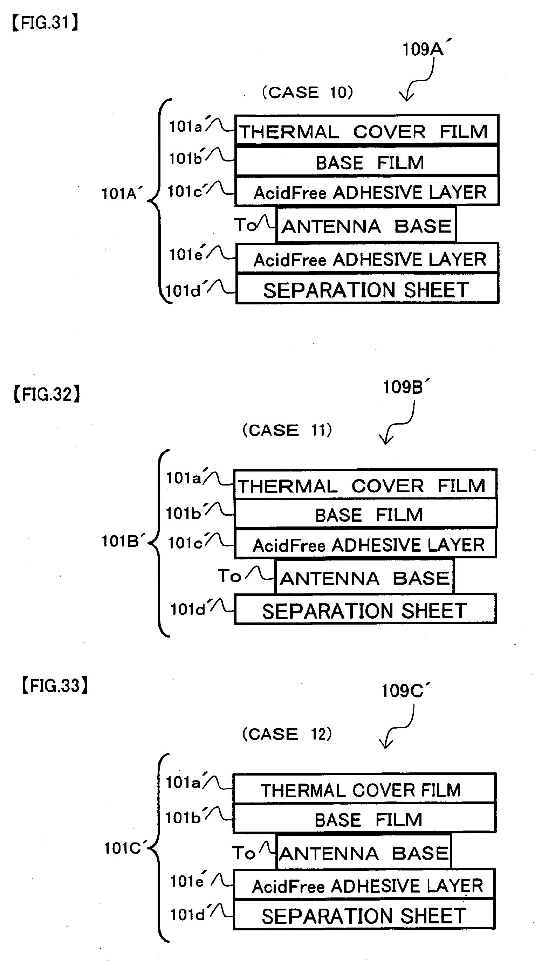

The most distinctive characteristic in the above basic construction (Fig. 30) is that the "acid free adhesive" is used in the adhesive used for the adhesive layer (particularly the adhesive layer adjacent to the RFID circuit element To and the adhesive layer to be the adhesive surface of an article to be stuck). The inventors have created the tag label tape with print 109 (RFID label T) as shown in Fig. 31 and after by constituting at least one of the adhesive layers by the "acid free adhesive". The detail will be described below.

Fig. 31 is a diagram schematically illustrating an example (hereinafter referred to as a "case 10") of the layered structure of a tag label tape with print 109A' (base tape 101A'). As shown in Fig. 31, in the case 10, the base tape 101A' comprises the thermal cover film 101a', the base film 101b', the acid free adhesive layer 101c', the acid free adhesive layer 101e', and a separation sheet 101d' from the front side (upper side in Fig. 31), and the RFID circuit element To (specifically, a sheet-state antenna base on which the RFID circuit element To is arranged. The same applies to the following) is provided to be held between the acid free adhesive layer 101c' and the acid free adhesive layer 101e'.

By providing the acid free adhesive layer 101c' and the acid free adhesive layer 101e' adjacently to the RFID circuit element To in this way, adverse effect of the acid component on the corrosion resistance of the RFID circuit element To as with the normal adhesive can be surely prevented. Also, the RFID circuit element To can be attached to the base film 101b' through the acid free adhesive layer 101c', and the base film 101b' and the separation sheet 101d' can be stuck together by portions located outside the RFID circuit element To of the acid free adhesive layer 101c' and the acid free adhesive layer 101e'. By constituting at least one of the adhesive layers using the acid free adhesive in this way, adverse effect on the corrosion resistance and durability of the RFID circuit element To and an object to be stuck such as protrusion of the acid component in the width direction at adhesion as with the normal adhesive can be prevented.

Fig. 32 is a diagram schematically illustrating an example (hereinafter referred to as a "case 11") of the layered structure of a tag label tape with print 109B' (base tape 101B'). As shown in Fig. 32, in the case 11, the base tape 101B' comprises the thermal cover film 101a', the base film 101b', the acid free adhesive layer 101c', and the separation sheet 101d' from the front side (upper side in Fig. 32), and the RFID circuit element To (specifically, a sheet-state antenna base on which the RFID circuit element To is arranged. The same applies to the following) is provided to be held between the acid free adhesive layer 101c' and the separation sheet 101d'.

By providing the acid free adhesive layer 101c' adjacently to the printed side of the RFID circuit element To in this way, adverse effect of the acid component on the corrosion resistance of the RFID circuit element To as with the normal adhesive can be surely prevented. Also, the RFID circuit element To can be attached to the base film 101b' through the acid free adhesive layer 101c', and the entire label can be stuck to the article to be stuck by a portion located outside the RFID circuit element To in the acid free adhesive layer 101c'. By this, adverse effect of the acid component on the corrosion resistance and durability of the RFID circuit element To and an object to be stuck as with the normal adhesive can be prevented.

Also, the construction of the case 11 corresponds to the layered structure of the base tape 101' (See Fig. 30) and the created tag label tape with print 109' used in the above variation.

Fig. 33 is a diagram schematically illustrating an example (hereinafter referred to as a "case 12") of the layered structure of a tag label tape with print 109C' (base tape 101C'). As shown in Fig. 33, in the case 12, the base tape 101C' comprises the thermal cover film 101a', the base film 101b', the acid free adhesive layer 101e', and the separation sheet 101d' from the front side (upper side in Fig. 33), and the RFID circuit element To (specifically, a sheet-state antenna base on which the RFID circuit element To is arranged. The same applies to the following) is provided to be held between the base film 101b' and the acid free adhesive layer 101e'.

By providing the acid free adhesive layer 101e' adjacently to the separation sheet side of the RFID circuit element To in this way, adverse effect of the acid component on the corrosion resistance of the RFID circuit element To as with the normal adhesive can be surely prevented. Also, the entire label can be stuck to the article to be stuck by the acid free adhesive layer 101e' covering substantially the entire separation sheet sides of the base film 101b' and the RFID circuit element To, and adverse effect of the acid component on the corrosion resistance and durability of the RFID circuit element To and an object to be stuck or the like as with the normal adhesive can be prevented.

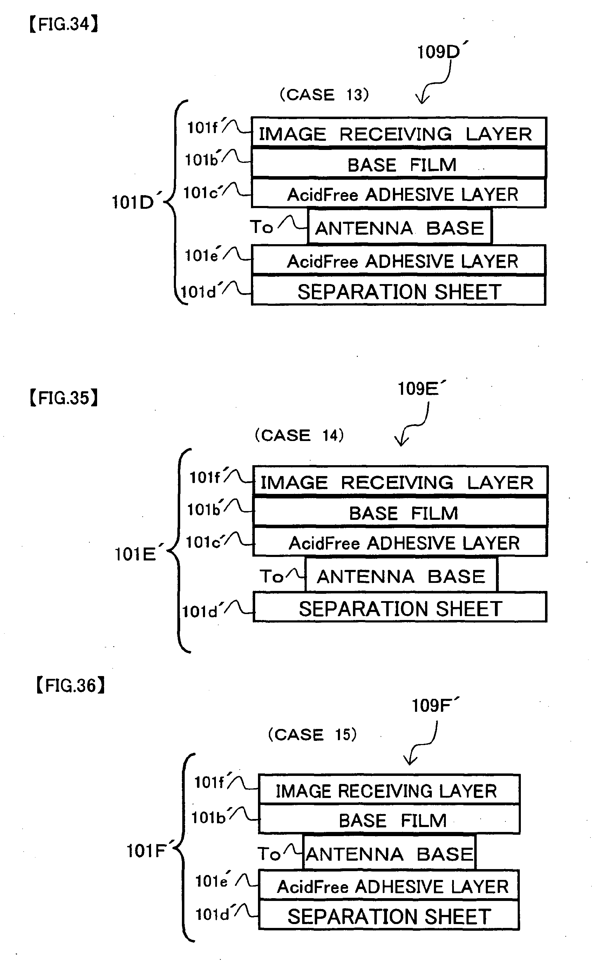

Fig. 34 is a diagram schematically illustrating an example (hereinafter referred to as a "case 13") of the layered structure of a tag label tape with print 109D' (base tape 101D'). In the case 13, instead of the thermal cover film in the above-mentioned variation, an image receiving layer is laminated using a printing method such as an ink ribbon other than the thermal type, but the construction is basically the same as that of the case 10. As shown in Fig. 34, in the case 13, the base tape 101D' comprises a image receiving layer 101f', the base film 101b', the acid free adhesive layer 101c', the acid free adhesive layer 101e', and the separation sheet 101d' from the front side (upper side in Fig. 34), and the RFID circuit element To (specifically, a sheet-state antenna base on which the RFID circuit element To is arranged. The same applies to the following) is provided to be held between the acid free adhesive layer 101c' and the acid free adhesive layer 101e'. With this case 13, the same effect as that of the case 10 can be also obtained.

Fig. 35 is a diagram schematically illustrating an example (hereinafter referred to as a "case 14") of the layered structure of a tag label tape with print 109E' (base tape 101E'). In the case 14, instead of the thermal cover film in the above-mentioned variation, an image receiving layer is laminated using a printing method such as an ink ribbon other than the thermal type, but the construction is basically the same as that of the case 11. As shown in Fig. 35, in the case 14, the base tape 101E' comprises the image receiving layer 101f', the base film 101b', the acid free adhesive layer 101c', and the release paler 101d' from the front side (upper side in Fig. 35), and the RFID circuit element To (specifically, a sheet-state antenna base on which the RFID circuit element To is arranged. The same applies to the following) is provided to be held between the acid free adhesive layer 101c' and the separation sheet 101d'. With this case 14, the same effect as that of the case 11 can be also obtained.

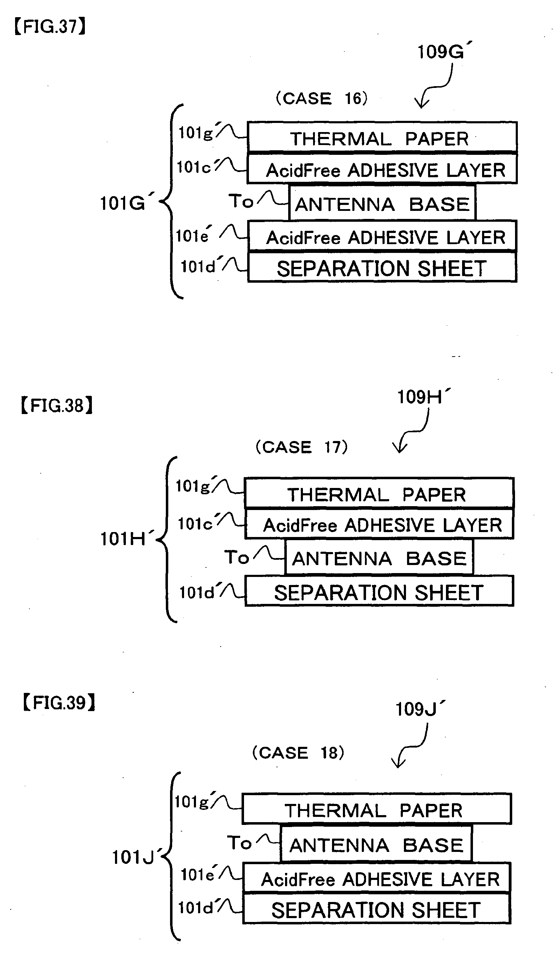

Fig. 36 is a diagram schematically illustrating an example (hereinafter referred to as a "case 15") of the layered structure of a tag label tape with print 109F' (base tape 101F'). In the case 15, instead of the thermal cover film in the above-mentioned variation, an image receiving layer is laminated using a printing method such as an ink ribbon other than the thermal type, but the construction is basically the same as that of the case 12. As shown in Fig. 36, in the case 15, the base tape 101F' comprises the image receiving layer 101f', the base film 101b', the acid free adhesive layer 101e', and the release paler 101d' from the front side (upper side in Fig. 36), and the RFID circuit element To (specifically, a sheet-state antenna base on which the RFID circuit element To is arranged. The same applies to the following) is provided to be held between the base film 101b' and the acid free adhesive layer 101e'. With this case 15, the same effect as that of the case 12 can be also obtained.

Fig. 37 is a diagram schematically illustrating an example (hereinafter referred to as a "case 16") of the layered structure of a tag label tape with print 109G' (base tape 101G'). In the case 16, instead of the thermal cover film and the base film in the above-mentioned variation, a thermal paper is used, but the construction is basically the same as that of the cases 10 and 13. As shown in Fig. 37, in the case 16, the base tape 101G' comprises a thermal paper 101g', the acid free adhesive layer 101c', the acid free adhesive layer 101e', and the release paler 101d' from the front side (upper side in Fig. 37), and the RFID circuit element To (specifically, a sheet-state antenna base on which the RFID circuit element To is arranged. The same applies to the following) is provided to be held between the acid free adhesive layer 101c' and the acid free adhesive layer 101e'. With this case 16, the same effect as that of the cases 10 and 13 can be also obtained.

Fig. 38 is a diagram schematically illustrating an example (hereinafter referred to as a "case 17") of the layered structure of a tag label tape with print 109H' (base tape 101H'). In the case 17, instead of the thermal cover film and the base film in the above-mentioned variation, a thermal paper is used, but the construction is basically the same as that of the cases 11 and 14. As shown in Fig. 38, in the case 17, the base tape 101H' comprises the thermal paper 101g', the acid free adhesive layer 101c', and the release paler 101d' from the front side (upper side in Fig. 38), and the RFID circuit element To (specifically, a sheet-state antenna base on which the RFID circuit element To is arranged. The same applies to the following) is provided to be held between the acid free adhesive layer 101c' and the separation sheet 101d'. With this case 17, the same effect as that of the cases 11 and 14 can be also obtained.

Fig. 39 is a diagram schematically illustrating an example (hereinafter referred to as a "case 18") of the layered structure of a tag label tape with print 109J' (base tape 101J'). In the case 18, instead of the thermal cover film and the base film in the above-mentioned variation, a thermal paper is used, but the construction is basically the same as that of the cases 12 and 15. As shown in Fig. 39, in the case 18, the base tape 101J' comprises the thermal paper 101g', the acid free adhesive layer 101e', and the release paler 101d' from the front side (upper side in Fig. 39), and the RFID circuit element To (specifically, a sheet-state antenna base on which the RFID circuit element To is arranged. The same applies to the following) is provided to be held between the thermal paper 101g' and the acid free adhesive layer 101e'. With this case 18, the same effect as that of the cases 12 and 15 can be also obtained.

### (2) Others

In one embodiment of the present invention described above, a loop antenna is used as the antenna LC on the device side and the antenna 152 on the RFID circuit element To side, and information transmission is carried out by magnetic induction (including electromagnetic induction, magnetic coupling and other non-contact induction through a magnetic field), but not limited to this, a dipole antenna, a patch antenna or the like may be used as transmission/receiving means as the above two antennas so as to carry out information transmission/receiving by wave communication.

Also, in the above, such a case was used for description that the tag label tape with print 109 to which printing and an access to the RFID circuit element To (reading or writing) have been finished is cut by the cutting mechanism 16 so as to create the tag label T, but not limited to this. That is, if a label mount separated in advance to a predetermined size corresponding to the label (so-called die-cut label) is continuously arranged on a tape fed out of the roll, there is no need to cut it by the cutting mechanism 15 but after the tape is discharged from the label discharge port 11, only the label mount (provided with the RFID circuit element To having been accessed and printed accordingly) may be separated from the tape so as to create the tag label T, and the present invention can be also applied to the above.

Also, the present invention is not limited to those in which the RFID tag information is read/written with respect to the IC circuit part 151 of the RFID circuit element To and printing is made by the printing head 10 that identifies the RFID circuit element To. The printing does not necessarily have to be performed but the present invention may be applied to those that read or write of the RFID tag information.

Moreover, in the above, a case was described that the first roll 102 is constructed so that the base tape 101 is wound around the reel member 102a, and the roll is arranged in the cartridge 7 and the base tape 101 is fed out thereof, but not limited to this. For example, a lengthy flat paper-state or a strip-state tape or sheet on which at least one RFID circuit element To is arranged (including those formed by cutting to an appropriate length after the tape wound around the roll has been fed out) is stacked in a predetermined storing portion (in the flat laminated state on a tray or the like, for example) to be made into a cartridge, and this cartridge may be attached in the cartridge holder on the tag-label producing device side so that it is transferred and conveyed from the storing portion that prints and writes so as to create the tag label.

Moreover, there can be a construction that the roll is directly and detachably attached to the tag-label producing device side of a construction that a lengthy flat paper- or a strip-state tape or sheet is transferred one by one from outside the tag-label producing device into the tag-label producing device by a predetermined feeder mechanism. Furthermore, not limited to those such as the cartridge 7 detachably attached to the tag-label producing device body, but the first roll 102 as an installed type or an integral type which can not be detached may be provided at the device body side. The same effect can be also obtained in these cases.

Also, other than mentioned above, the above embodiments and methods of each of the variations may be combined for use as appropriate.

Though not specifically exemplified, the present invention should be put into practice with various changes made in a range not departing from its gist.

## Claims

1. A tag tape (101; 101') comprising:
a separation material layer (101d; 101d') provided at the end on one side in the thickness direction of a tape (101; 101') and separated from other parts at adhesion;
a sheet-state antenna base (To) disposed on the other side in said tape thickness direction from said separation material layer (101d; 101d') and on which an RFID circuit element (To) provided with an IC circuit part (151) that stores information and a tag-side antenna (152) that transmits/receives of the information is arranged; and
at least one adhesive layer (101a, 101c, 101e, 101h; 101c', 101e') containing a tag adjacent adhesive layer (101a, 101c, 101e, 101h; 101c', 101e') provided adjacently to the one side or the other side in said tape thickness direction from said antenna base (To), and of which at least one layer is constituted using an acid free adhesive.

2. The tag tape (101; 101') according to Claim 1, **characterized in that**
said tag adjacent adhesive layer (101a, 101c, 101e, 101h; 101c', 101e') is constituted using said acid free adhesive.

3. The tag tape (101) according to Claim 2, further comprising:
a normal adhesive layer (101a, 101c) constituted using a normal adhesive, separately from said tag adjacent adhesive layer (101a, 101c, 101e, 101h) constituted using said acid free adhesive, as said adhesive layer.

4. The tag tape (101; 101') according to any of Claims I to 3, further comprising:
a print-receiving tape layer (103; 101a', 101f', 101g') provided at the end on the other side in said tape thickness direction, that effects predetermined printing,

5. An RFID label (T) produced by use of said tag tape (101; 101') according to any of Claims 1 to 4,
**characterized in that**
said RFID label (T) is constituted providing a print-receiving tape layer (103; 101a', 101f', 101g') effected predetermined printing at the end on the other side in said tape thickness direction of said tag tape (101; 101').

6. The RFID label (T) according to Claim 5, further comprising:
a first intermediate base layer (101b; 101b') disposed at an intermediate part between said print-receiving tape layer (103; 101a', 101f', 101g') and said antenna base (To) in the label thickness direction,
**characterized in that**
said adhesive layer (101c, 101e, 101h; 101c' 101e') constituted by said acid free adhesive is provided adjacently at least to one of said print-receiving tape layer (103; 101a', 101f', 101g') side and said separation material layer (101d; 101d') side in the label thickness direction from said antenna base (To).

7. The RFID label (T) according to any of Claims 5 to 6, further comprising:
a second intermediate base layer (101g) disposed at an intermediate part between said separation material layer (101d) and said antenna base (To) in the label thickness direction, **characterized in that**
said adhesive layer (101e, 101h) constituted by said acid free adhesive is provided adjacently at least to one of said print-receiving tape layer (103) side and said separation material layer (101d) side in the label thickness direction from said antenna base (To).

8. The RFID label (T) according to any of Claims 5 to 7, further comprising:
a third intermediate base layer (101b) disposed at an intermediate part between said print-receiving tape layer (103) and said antenna base (To) in the label thickness direction; and
a fourth intermediate base layer (101g) disposed at an intermediate part between said third intermediate base layer (101b) and said separation material layer (101d) in the label thickness direction, **characterized in that**
said antenna base (To) is arranged at an intermediate part between said third intermediate base layer (101b) and said fourth intermediate base layer (101g) in the label thickness direction; and
said adhesive layer (101e, 101h) constituted by said acid free adhesive is provided adjacently at least to one of said print-receiving tape layer (103) side and said separation material layer (101d) side in the label thickness direction from said antenna base (To).

9. The RFID label (T) according to any of Claims 5 to 8,
**characterized in that**
said print-receiving tape layer (103) has said predetermined printing on the surface on said antenna base (To) side.

10. The RFID label (T) according to any of Claims 5 to 9,
**characterized in that**
said print-receiving tape layer (101a', 101f', 101g') has said predetermined printing on the surface opposite to said antenna base (To) side.
